# EUROPEAN PATENT SPECIFICATION

(11) **EP 3 324 571 B1**
(45) Date of publication and mention of the grant of the patent: **19.08.2020**
(21) Application number: 15901962.9
(22) Date of filing: 25.08.2015
(51) Int. Cl.: H04W 12/04, H04L 29/06, H04L 9/14

(54) **SERVICE PROCESSING METHOD AND APPARATUS**
DIENSTVERARBEITUNGSVERFAHREN UND -VORRICHTUNG
PROCÉDÉ ET APPAREIL DE TRAITEMENT DE SERVICE

(43) Date of publication of application: 23.05.2018
(73) Proprietor: Huawei Technologies Co., Ltd., Longgang District Shenzhen, Guangdong 518129 (CN)
(72) Inventor: XIONG, Chunshan, Shenzhen Guangdong 518129 (CN); WEI, Anni, Shenzhen Guangdong 518129 (CN)
(74) Representative: Pfenning, Meinig & Partner mbB
(86) International application number: PCT/CN2015/088032
(87) International publication number: WO 2017/031691

(56) References cited:
- CN-A- 101 141 243
- CN-A- 101 141 244
- CN-A- 103 688 485
- US-A1- 2007 260 871
- US-A1- 2014 115 702

## Description

### TECHNICAL FIELD

The present invention relates to the communications field, and in particular, to a service processing method and apparatus.

### BACKGROUND

The Secure Socket Layer (security socket layer, SSL for short) protocol and its successor, the Transport Layer Security (transport layer security, TLS for short) protocol are used to provide services such as encryption, identity authentication, and data integrity for network communication, and are already widely applied to secure communication between a browser and a network server. The SSL/TLS protocol is located between the Transmission Control Protocol (transmission control protocol, TCP for short) at a transport layer and the Hypertext Transfer Protocol (hypertext transfer protocol, HTTP for short) at an application layer.

A service processing method in the prior art includes: user equipment (user equipment, UE for short) and a network server set up an encrypted connection based on the Hypertext Transfer Security Protocol over the SSL/TLS protocol used at a lower layer (hyper text transfer protocol over secure socket layer, HTTPS for short), and agree upon a first key and a second key; after encrypting service information by using the first key, the user equipment sends the encrypted service information to the network server; the network server obtains the service information through decryption by using the second key, generates service data according to the service information, and after encrypting the service data, sends the encrypted service data to the user equipment; and the user equipment obtains the service data through decryption by using the first key. The service information may be used to request a web page from the network server, or may be used to request an object from the network server.

Generally, a proxy node may also be disposed between the user equipment and the network server. In a scenario in which a proxy node exists, when the encrypted connection is set up between the user equipment and the network server, a ciphertext obtained through encryption is transmitted between the user equipment and the network server. Because the proxy node cannot obtain the first key and the second key, the proxy node cannot decrypt the ciphertext. Consequently, the proxy node cannot provide service optimization for the user equipment.

US2014/0115702 A1concerns encrypted data inspection in a network environment including a client comprising an extraction module, a firewall comprising a security module, and a server wherein an encryption protocol session operates between the client, the firewall and the server. US 2007/0260871 A1 addresses inspecting encrypted communications with end-to-end integrity.

### SUMMARY

To resolve a problem that a proxy node cannot provide service optimization for user equipment because the proxy node cannot decrypt a ciphertext, embodiments of the present invention provide a service processing method and apparatus according to the independent claims. Further embodiments and aspects are provided in this application which constitute embodiments of the invention if and only if falling within the scope of the independent claims.

According to a first aspect, a service processing method is provided. The method includes:
setting up, by a proxy node, in place of a network server in a connection setup process between user equipment UE and the network server, a first encrypted connection to the UE, and setting up a second encrypted connection to the network server;
obtaining, by the proxy node from the UE, an encryption context generated in the process of setting up the first encrypted connection, and generating a first key according to the encryption context; and
receiving, by the proxy node, a ciphertext sent by the UE, decrypting the ciphertext by using the first key, processing obtained service information, and sending the processed service information to the network server by using the second encrypted connection, where the ciphertext is obtained by the UE by encrypting the service information by using a second key, the first key corresponds to the second key, and the second key is generated by the UE according to the encryption context.

In a first possible implementation of the first aspect, the setting up, by a proxy node, in place of a network server in a connection setup process between user equipment UE and the network server, a first encrypted connection to the UE, and setting up a second encrypted connection to the network server includes:
intercepting, by the proxy node, a Transmission Control Protocol TCP setup request sent by the UE to the network server, where the TCP setup request includes an Internet Protocol IP address of the UE and an IP address of the network server;
setting up, by the proxy node, in place of the network server, a TCP connection to the UE according to the IP address of the network server, and setting up, in place of the UE, a TCP connection to the network server according to the IP address of the UE; and
intercepting, by the proxy node, an encryption setup request sent by the UE to the network server by using the TCP connection, setting up, in place of the network server, the first encrypted connection to the UE according to the encryption setup request, and setting up, in place of the UE, the second encrypted connection to the network server according to the encryption setup request; or
intercepting, by the proxy node, a TCP setup request sent by the UE to the network server, where the TCP setup request includes an IP address of the UE and an IP address of the network server;
setting up, by the proxy node, in place of the network server, a TCP connection to the UE according to the IP address of the network server, and setting up a TCP connection to the network server according to an IP address of the proxy node; and
intercepting, by the proxy node, an encryption setup request sent by the UE to the network server by using the TCP connection, setting up, in place of the network server, the first encrypted connection to the UE according to the encryption setup request, and setting up the second encrypted connection to the network server according to the IP address of the proxy node.

In a second possible implementation of the first aspect, the setting up, by a proxy node, in place of a network server in a connection setup process between user equipment UE and the network server, a first encrypted connection to the UE, and setting up a second encrypted connection to the network server includes:
intercepting, by the proxy node, a TCP setup request sent by the UE to a tunnel gateway, where the TCP setup request includes an IP address of the UE and an IP address of the tunnel gateway, and the tunnel gateway is located between the proxy node and the network server;
setting up, by the proxy node, in place of the tunnel gateway, a TCP connection to the UE according to the IP address of the tunnel gateway, setting up, in place of the UE, a TCP connection to the tunnel gateway according to the IP address of the UE, and triggering the tunnel gateway to set up a TCP connection to the network server according to the IP address of the tunnel gateway;
intercepting, by the proxy node, an encryption setup request sent by the UE to the tunnel gateway by using the TCP connection, where the encryption setup request includes the IP address of the UE and an IP address of the network server; and
setting up, by the proxy node, in place of the network server, the first encrypted connection to the UE according to the IP address of the network server, and forwarding the encryption setup request to the tunnel gateway by using the TCP connection, where the tunnel gateway is configured to forward the encryption setup request to the network server by using the TCP connection, and the encryption setup request is used to instruct the network server to set up the second encrypted connection to the proxy node that is in place of the UE.

In a third possible implementation of the first aspect, the setting up, by a proxy node, in place of a network server in a connection setup process between user equipment UE and the network server, a first encrypted connection to the UE, and setting up a second encrypted connection to the network server includes:
intercepting, by the proxy node, a TCP setup request sent by a tunnel gateway to the network server, where the TCP setup request is sent after the tunnel gateway sets up a TCP connection to the UE, the TCP setup request includes an IP address of the tunnel gateway and an IP address of the network server, and the tunnel gateway is located between the UE and the proxy node;
setting up, by the proxy node, in place of the network server, a TCP connection to the tunnel gateway according to the IP address of the network server, and setting up, in place of the tunnel gateway, a TCP connection to the network server according to the IP address of the tunnel gateway;
intercepting, by the proxy node, an encryption setup request sent by the tunnel gateway to the network server by using the TCP connection, where the encryption setup request is sent by the UE to the tunnel gateway by using the TCP connection, and the encryption setup request includes an IP address of the UE and the IP address of the network server; and
setting up, by the proxy node, in place of the network server, the first encrypted connection to the UE according to the IP address of the network server, and forwarding the encryption setup request to the network server by using the TCP connection, where the encryption setup request is used to instruct the network server to set up the second encrypted connection to the proxy node that is in place of the UE.

With reference to the first possible implementation of the first aspect, or the second possible implementation of the first aspect, or the third possible implementation of the first aspect, in a fourth possible implementation of the first aspect, the obtaining, by the proxy node from the UE, an encryption context generated in the process of setting up the first encrypted connection includes:
sending, by the proxy node to a key server, an obtaining request that carries a connection identifier of the TCP connection, where the obtaining request is used to instruct the key server to determine the UE according to the connection identifier, forward the obtaining request to the UE, receive the encryption context sent by the UE according to the connection identifier, and forward the encryption context to the proxy node; and receiving, by the proxy node, the encryption context forwarded by the key server; or
sending, by the proxy node to the UE, an obtaining request that carries a connection identifier of the TCP connection, where the obtaining request is used to instruct the UE to send the encryption context to a key server according to the connection identifier, and the encryption context is used to instruct the key server to forward the encryption context to the proxy node; and receiving, by the proxy node, the encryption context forwarded by the key server; or
receiving, by the proxy node, the encryption context forwarded by a key server, where the encryption context is forwarded to the proxy node after the key server receives the encryption context and a connection identifier of the TCP connection that are sent by the UE and determines, according to a correspondence, the proxy node corresponding to the connection identifier, and the correspondence is used to indicate a relationship between the connection identifier and the proxy node.

According to a second aspect, a service processing method is provided. The method includes:
setting up, by user equipment UE, in a connection setup process between the UE and a network server, a first encrypted connection to a proxy node that is in place of the network server, where the proxy node is configured to set up a second encrypted connection to the network server;
providing, by the UE, the proxy node with an encryption context that is generated in the process of setting up the first encrypted connection, where the encryption context is used to instruct the proxy node to generate a first key according to the encryption context; and generating, by the UE, a second key according to the encryption context, where the second key corresponds to the first key; and
encrypting, by the UE, service information by using the second key, and sending an obtained ciphertext to the proxy node, where the ciphertext is used to instruct the proxy node to decrypt the ciphertext by using the first key, process the obtained service information, and send the processed service information to the network server by using the second encrypted connection.

In a first possible implementation of the second aspect, the setting up, by UE, in a connection setup process between the UE and a network server, a first encrypted connection to a proxy node that is in place of the network server, where the proxy node is configured to set up a second encrypted connection to the network server includes:
sending, by the UE, a Transmission Control Protocol TCP setup request to the network server, where the TCP setup request includes an Internet Protocol IP address of the UE and an IP address of the network server;
setting up, by the UE according to the IP address of the network server that is obtained by the proxy node after the proxy node intercepts the TCP setup request, a TCP connection to the proxy node that is in place of the network server, where the proxy node is configured to set up, in place of the UE, a TCP connection to the network server according to the IP address of the UE; and
sending, by the UE, an encryption setup request to the network server by using the TCP connection, and setting up, according to the encryption setup request intercepted by the proxy node, the first encrypted connection to the proxy node that is in place of the network server, where the proxy node is configured to set up, in place of the UE, the second encrypted connection to the network server according to the encryption setup request; or
sending, by the UE, a TCP setup request to the network server, where the TCP setup request includes an IP address of the UE and an IP address of the network server;
setting up, by the UE according to the IP address of the network server that is obtained by the proxy node after the proxy node intercepts the TCP setup request, a TCP connection to the proxy node that is in place of the network server, where the proxy node is configured to set up a TCP connection to the network server according to an IP address of the proxy node; and
sending, by the UE, an encryption setup request to the network server by using the TCP connection, and setting up, according to the encryption setup request intercepted by the proxy node, the first encrypted connection to the proxy node that is in place of the network server, where the proxy node is configured to set up the second encrypted connection to the network server according to the IP address of the proxy node.

In a second possible implementation of the second aspect, the setting up, by UE, in a connection setup process between the UE and a network server, a first encrypted connection to a proxy node that is in place of the network server, where the proxy node is configured to set up a second encrypted connection to the network server includes:
sending, by the UE, a TCP setup request to a tunnel gateway, where the TCP setup request includes an IP address of the UE and an IP address of the tunnel gateway, and the tunnel gateway is located between the proxy node and the network server;
setting up, by the UE according to the IP address of the tunnel gateway that is obtained by the proxy node after the proxy node intercepts the TCP setup request, a TCP connection to the proxy node that is in place of the tunnel gateway, where the proxy node is configured to set up, in place of the UE, a TCP connection to the tunnel gateway according to the IP address of the UE, and trigger the tunnel gateway to set up a TCP connection to the network server according to the IP address of the tunnel gateway;
sending, by the UE, an encryption setup request to the tunnel gateway by using the TCP connection, where the encryption setup request includes the IP address of the UE and an IP address of the network server; and
setting up, by the UE according to the IP address of the network server that is obtained by the proxy node after the proxy node intercepts the encryption setup request, the first encrypted connection to the proxy node that is in place of the network server, where the proxy node is configured to forward the encryption setup request to the tunnel gateway by using the TCP connection, and the encryption setup request is used to instruct the tunnel gateway to forward the encryption setup request to the network server by using the TCP connection and instruct the network server to set up the second encrypted connection to the proxy node that is in place of the UE.

In a third possible implementation of the second aspect, the setting up, by UE, in a connection setup process between the UE and a network server, a first encrypted connection to a proxy node that is in place of the network server, where the proxy node is configured to set up a second encrypted connection to the network server includes:
setting up, by the UE, a TCP connection to a tunnel gateway, where the tunnel gateway is configured to send a TCP setup request to the network server, the TCP setup request includes an IP address of the tunnel gateway and an IP address of the network server, the tunnel gateway is configured to set up, according to the IP address of the network server that is obtained by the proxy node after the proxy node intercepts the TCP setup request, a TCP connection to the proxy node that is in place of the network server, the proxy node is configured to set up, in place of the tunnel gateway, a TCP connection to the network server according to the IP address of the tunnel gateway, and the tunnel gateway is located between the UE and the proxy node;
sending, by the UE, an encryption setup request to the tunnel gateway by using the TCP connection, where the encryption setup request is used to instruct the tunnel gateway to forward the encryption setup request to the network server, and the encryption setup request includes an IP address of the UE and the IP address of the network server; and
setting up, by the UE according to the IP address of the network server that is obtained by the proxy node after the proxy node intercepts the encryption setup request, the first encrypted connection to the proxy node that is in place of the network server, where the proxy node is configured to forward the encryption setup request to the network server by using the TCP connection, and the encryption setup request is used to instruct the network server to set up the second encrypted connection to the proxy node that is in place of the UE.

With reference to the first possible implementation of the second aspect, or the second possible implementation of the second aspect, or the third possible implementation of the second aspect, in a fourth possible implementation of the second aspect, the providing, by the UE, the proxy node with an encryption context that is generated in the process of setting up the first encrypted connection includes:
receiving, by the UE, an obtaining request that carries a connection identifier of the TCP connection and is forwarded by a key server, and sending the encryption context to the key server according to the connection identifier, where the encryption context is used to instruct the key server to forward the encryption context to the proxy node, and the obtaining request is sent by the proxy node to the key server and is sent by the key server after the key server determines the UE according to the connection identifier; or
receiving, by the UE, an obtaining request that carries a connection identifier of the TCP connection and is sent by the proxy node, and sending the encryption context to a key server according to the connection identifier, where the encryption context is used to instruct the key server to forward the encryption context to the proxy node; or
sending, by the UE, the encryption context and a connection identifier of the TCP connection to a key server, where the encryption context is forwarded to the proxy node after the key server determines, according to a correspondence, the proxy node corresponding to the connection identifier, and the correspondence is used to indicate a relationship between the connection identifier and the proxy node.

According to a third aspect, a service processing apparatus is provided and applied to a proxy node. The apparatus includes:
a connection setup module, configured to set up, in place of a network server in a connection setup process between user equipment UE and the network server, a first encrypted connection to the UE, and set up a second encrypted connection to the network server;
a key generation module, configured to obtain, from the UE, an encryption context generated in the process of setting up the first encrypted connection, and generate a first key according to the encryption context; and
a service processing module, configured to receive a ciphertext sent by the UE, decrypt the ciphertext by using the first key generated by the key generation module, process obtained service information, and send the processed service information to the network server by using the second encrypted connection, where the ciphertext is obtained by the UE by encrypting the service information by using a second key, the first key corresponds to the second key, and the second key is generated by the UE according to the encryption context.

In a first possible implementation of the third aspect, the connection setup module is specifically configured to:
intercept a Transmission Control Protocol TCP setup request sent by the UE to the network server, where the TCP setup request includes an Internet Protocol IP address of the UE and an IP address of the network server;
set up, in place of the network server, a TCP connection to the UE according to the IP address of the network server, and set up, in place of the UE, a TCP connection to the network server according to the IP address of the UE; and
intercept an encryption setup request sent by the UE to the network server by using the TCP connection, set up, in place of the network server, the first encrypted connection to the UE according to the encryption setup request, and set up, in place of the UE, the second encrypted connection to the network server according to the encryption setup request; or
intercept a TCP setup request sent by the UE to the network server, where the TCP setup request includes an IP address of the UE and an IP address of the network server;
set up, in place of the network server, a TCP connection to the UE according to the IP address of the network server, and set up a TCP connection to the network server according to an IP address of the proxy node; and
intercept an encryption setup request sent by the UE to the network server by using the TCP connection, set up, in place of the network server, the first encrypted connection to the UE according to the encryption setup request, and set up the second encrypted connection to the network server according to the IP address of the proxy node.

In a second possible implementation of the third aspect, the connection setup module is specifically configured to:
intercept a TCP setup request sent by the UE to a tunnel gateway, where the TCP setup request includes an IP address of the UE and an IP address of the tunnel gateway, and the tunnel gateway is located between the proxy node and the network server;
set up, in place of the tunnel gateway, a TCP connection to the UE according to the IP address of the tunnel gateway, set up, in place of the UE, a TCP connection to the tunnel gateway according to the IP address of the UE, and trigger the tunnel gateway to set up a TCP connection to the network server according to the IP address of the tunnel gateway;
intercept an encryption setup request sent by the UE to the tunnel gateway by using the TCP connection, where the encryption setup request includes the IP address of the UE and an IP address of the network server; and
set up, in place of the network server, the first encrypted connection to the UE according to the IP address of the network server, and forward the encryption setup request to the tunnel gateway by using the TCP connection, where the tunnel gateway is configured to forward the encryption setup request to the network server by using the TCP connection, and the encryption setup request is used to instruct the network server to set up the second encrypted connection to the proxy node that is in place of the UE.

In a third possible implementation of the third aspect, the connection setup module is specifically configured to:
intercept a TCP setup request sent by a tunnel gateway to the network server, where the TCP setup request is sent after the tunnel gateway sets up a TCP connection to the UE, the TCP setup request includes an IP address of the tunnel gateway and an IP address of the network server, and the tunnel gateway is located between the UE and the proxy node;
set up, in place of the network server, a TCP connection to the tunnel gateway according to the IP address of the network server, and set up, in place of the tunnel gateway, a TCP connection to the network server according to the IP address of the tunnel gateway;
intercept an encryption setup request sent by the tunnel gateway to the network server by using the TCP connection, where the encryption setup request is sent by the UE to the tunnel gateway by using the TCP connection, and the encryption setup request includes an IP address of the UE and the IP address of the network server; and
set up, in place of the network server, the first encrypted connection to the UE according to the IP address of the network server, and forward the encryption setup request to the network server by using the TCP connection, where the encryption setup request is used to instruct the network server to set up the second encrypted connection to the proxy node that is in place of the UE.

With reference to the first possible implementation of the third aspect, or the second possible implementation of the third aspect, or the third possible implementation of the third aspect, in a fourth possible implementation of the third aspect, the key generation module is specifically configured to:
send, to a key server, an obtaining request that carries a connection identifier of the TCP connection, where the obtaining request is used to instruct the key server to determine the UE according to the connection identifier, forward the obtaining request to the UE, receive the encryption context sent by the UE according to the connection identifier, and forward the encryption context to the proxy node; and receive the encryption context forwarded by the key server; or
send, to the UE, an obtaining request that carries a connection identifier of the TCP connection, where the obtaining request is used to instruct the UE to send the encryption context to a key server according to the connection identifier, and the encryption context is used to instruct the key server to forward the encryption context to the proxy node; and receive the encryption context forwarded by the key server; or
receive the encryption context forwarded by a key server, where the encryption context is forwarded to the proxy node after the key server receives the encryption context and a connection identifier of the TCP connection that are sent by the UE and determines, according to a correspondence, the proxy node corresponding to the connection identifier, and the correspondence is used to indicate a relationship between the connection identifier and the proxy node.

According to a fourth aspect, a service processing apparatus is provided and applied to user equipment UE. The apparatus includes:
a connection setup module, configured to set up, in a connection setup process between the UE and a network server, a first encrypted connection to a proxy node that is in place of the network server, where the proxy node is configured to set up a second encrypted connection to the network server;
a key providing module, configured to provide the proxy node with an encryption context that is generated in the process of setting up the first encrypted connection, where the encryption context is used to instruct the proxy node to generate a first key according to the encryption context; and generate, by the UE, a second key according to the encryption context, where the second key corresponds to the first key; and
a ciphertext sending module, configured to encrypt service information by using the second key generated by the key providing module, and send an obtained ciphertext to the proxy node, where the ciphertext is used to instruct the proxy node to decrypt the ciphertext by using the first key, process the obtained service information, and send the processed service information to the network server by using the second encrypted connection.

In a first possible implementation of the fourth aspect, the connection setup module is specifically configured to:
send a Transmission Control Protocol TCP setup request to the network server, where the TCP setup request includes an Internet Protocol IP address of the UE and an IP address of the network server;
set up, according to the IP address of the network server that is obtained by the proxy node after the proxy node intercepts the TCP setup request, a TCP connection to the proxy node that is in place of the network server, where the proxy node is configured to set up, in place of the UE, a TCP connection to the network server according to the IP address of the UE; and
send an encryption setup request to the network server by using the TCP connection, and set up, according to the encryption setup request intercepted by the proxy node, the first encrypted connection to the proxy node that is in place of the network server, where the proxy node is configured to set up, in place of the UE, the second encrypted connection to the network server according to the encryption setup request; or
send a TCP setup request to the network server, where the TCP setup request includes an IP address of the UE and an IP address of the network server;
set up, according to the IP address of the network server that is obtained by the proxy node after the proxy node intercepts the TCP setup request, a TCP connection to the proxy node that is in place of the network server, where the proxy node is configured to set up a TCP connection to the network server according to an IP address of the proxy node; and
send an encryption setup request to the network server by using the TCP connection, and set up, according to the encryption setup request intercepted by the proxy node, the first encrypted connection to the proxy node that is in place of the network server, where the proxy node is configured to set up the second encrypted connection to the network server according to the IP address of the proxy node.

In a second possible implementation of the fourth aspect, the connection setup module is specifically configured to:
send a TCP setup request to a tunnel gateway, where the TCP setup request includes an IP address of the UE and an IP address of the tunnel gateway, and the tunnel gateway is located between the proxy node and the network server;
set up, according to the IP address of the tunnel gateway that is obtained by the proxy node after the proxy node intercepts the TCP setup request, a TCP connection to the proxy node that is in place of the tunnel gateway, where the proxy node is configured to set up, in place of the UE, a TCP connection to the tunnel gateway according to the IP address of the UE, and trigger the tunnel gateway to set up a TCP connection to the network server according to the IP address of the tunnel gateway;
send an encryption setup request to the tunnel gateway by using the TCP connection, where the encryption setup request includes the IP address of the UE and an IP address of the network server; and
set up, according to the IP address of the network server that is obtained by the proxy node after the proxy node intercepts the encryption setup request, the first encrypted connection to the proxy node that is in place of the network server, where the proxy node is configured to forward the encryption setup request to the tunnel gateway by using the TCP connection, and the encryption setup request is used to instruct the tunnel gateway to forward the encryption setup request to the network server by using the TCP connection and instruct the network server to set up the second encrypted connection to the proxy node that is in place of the UE.

In a third possible implementation of the fourth aspect, the connection setup module is specifically configured to:
set up a TCP connection to a tunnel gateway, where the tunnel gateway is configured to send a TCP setup request to the network server, the TCP setup request includes an IP address of the tunnel gateway and an IP address of the network server, the tunnel gateway is configured to set up, according to the IP address of the network server that is obtained by the proxy node after the proxy node intercepts the TCP setup request, a TCP connection to the proxy node that is in place of the network server, the proxy node is configured to set up, in place of the tunnel gateway, a TCP connection to the network server according to the IP address of the tunnel gateway, and the tunnel gateway is located between the UE and the proxy node;
send an encryption setup request to the tunnel gateway by using the TCP connection, where the encryption setup request is used to instruct the tunnel gateway to forward the encryption setup request to the network server, and the encryption setup request includes an IP address of the UE and the IP address of the network server; and
set up, according to the IP address of the network server that is obtained by the proxy node after the proxy node intercepts the encryption setup request, the first encrypted connection to the proxy node that is in place of the network server, where the proxy node is configured to forward the encryption setup request to the network server by using the TCP connection, and the encryption setup request is used to instruct the network server to set up the second encrypted connection to the proxy node that is in place of the UE.

With reference to the first possible implementation of the fourth aspect, or the second possible implementation of the fourth aspect, or the third possible implementation of the fourth aspect, in a fourth possible implementation of the fourth aspect, the key providing module is specifically configured to:
receive an obtaining request that carries a connection identifier of the TCP connection and is forwarded by a key server, and send the encryption context to the key server according to the connection identifier, where the encryption context is used to instruct the key server to forward the encryption context to the proxy node, and the obtaining request is sent by the proxy node to the key server and is sent by the key server after the key server determines the UE according to the connection identifier; or
receive an obtaining request that carries a connection identifier of the TCP connection and is sent by the proxy node, and send the encryption context to a key server according to the connection identifier, where the encryption context is used to instruct the key server to forward the encryption context to the proxy node; or
send the encryption context and a connection identifier of the TCP connection to a key server, where the encryption context is forwarded to the proxy node after the key server determines, according to a correspondence, the proxy node corresponding to the connection identifier, and the correspondence is used to indicate a relationship between the connection identifier and the proxy node.

According to a fifth aspect, a service processing apparatus is provided and applied to a proxy node. The apparatus includes: a bus, and a processor, a memory, a transmitter, and a receiver that are connected to the bus, where the memory is configured to store several instructions, and the processor is configured to execute the instructions;
the processor is configured to set up, in place of a network server in a connection setup process between user equipment UE and the network server, a first encrypted connection to the UE, and set up a second encrypted connection to the network server;
the receiver is configured to obtain, from the UE, an encryption context generated in the process of setting up the first encrypted connection;
the processor is further configured to generate a first key according to the encryption context received by the receiver;
the receiver is further configured to receive a ciphertext sent by the UE;
the processor is further configured to decrypt the ciphertext by using the first key, and process obtained service information; and
the transmitter is configured to send the service information that has been processed by the processor to the network server by using the second encrypted connection, where the ciphertext is obtained by the UE by encrypting the service information by using a second key, the first key corresponds to the second key, and the second key is generated by the UE according to the encryption context.

In a first possible implementation of the fifth aspect, the receiver is further configured to intercept a Transmission Control Protocol TCP setup request sent by the UE to the network server, where the TCP setup request includes an Internet Protocol IP address of the UE and an IP address of the network server;
the processor is further configured to set up, in place of the network server, a TCP connection to the UE according to the IP address of the network server, and set up, in place of the UE, a TCP connection to the network server according to the IP address of the UE;
the receiver is further configured to intercept an encryption setup request sent by the UE to the network server by using the TCP connection; and
the processor is further configured to set up, in place of the network server, the first encrypted connection to the UE according to the encryption setup request, and set up, in place of the UE, the second encrypted connection to the network server according to the encryption setup request; or
the receiver is further configured to intercept a TCP setup request sent by the UE to the network server, where the TCP setup request includes an IP address of the UE and an IP address of the network server;
the processor is further configured to set up, in place of the network server, a TCP connection to the UE according to the IP address of the network server, and set up a TCP connection to the network server according to an IP address of the proxy node;
the receiver is further configured to intercept an encryption setup request sent by the UE to the network server by using the TCP connection; and
the processor is further configured to set up, in place of the network server, the first encrypted connection to the UE according to the encryption setup request, and set up the second encrypted connection to the network server according to the IP address of the proxy node.

In a second possible implementation of the fifth aspect, the receiver is further configured to intercept a TCP setup request sent by the UE to a tunnel gateway, where the TCP setup request includes an IP address of the UE and an IP address of the tunnel gateway, and the tunnel gateway is located between the proxy node and the network server;
the processor is further configured to set up, in place of the tunnel gateway, a TCP connection to the UE according to the IP address of the tunnel gateway, set up, in place of the UE, a TCP connection to the tunnel gateway according to the IP address of the UE, and trigger the tunnel gateway to set up a TCP connection to the network server according to the IP address of the tunnel gateway;
the receiver is further configured to intercept an encryption setup request sent by the UE to the tunnel gateway by using the TCP connection, where the encryption setup request includes the IP address of the UE and an IP address of the network server;
the processor is further configured to set up, in place of the network server, the first encrypted connection to the UE according to the IP address of the network server; and
the transmitter is further configured to forward the encryption setup request to the tunnel gateway by using the TCP connection, where the tunnel gateway is configured to forward the encryption setup request to the network server by using the TCP connection, and the encryption setup request is used to instruct the network server to set up the second encrypted connection to the proxy node that is in place of the UE.

In a third possible implementation of the fifth aspect, the receiver is further configured to intercept a TCP setup request sent by a tunnel gateway to the network server, where the TCP setup request is sent after the tunnel gateway sets up a TCP connection to the UE, the TCP setup request includes an IP address of the tunnel gateway and an IP address of the network server, and the tunnel gateway is located between the UE and the proxy node;
the processor is further configured to set up, in place of the network server, a TCP connection to the tunnel gateway according to the IP address of the network server, and set up, in place of the tunnel gateway, a TCP connection to the network server according to the IP address of the tunnel gateway;
the receiver is further configured to intercept an encryption setup request sent by the tunnel gateway to the network server by using the TCP connection, where the encryption setup request is sent by the UE to the tunnel gateway by using the TCP connection, and the encryption setup request includes an IP address of the UE and the IP address of the network server;
the processor is further configured to set up, in place of the network server, the first encrypted connection to the UE according to the IP address of the network server; and
the transmitter is further configured to forward the encryption setup request to the network server by using the TCP connection, where the encryption setup request is used to instruct the network server to set up the second encrypted connection to the proxy node that is in place of the UE.

With reference to the first possible implementation of the fifth aspect, or the second possible implementation of the fifth aspect, or the third possible implementation of the fifth aspect, in a fourth possible implementation of the fifth aspect, the transmitter is further configured to send, to a key server, an obtaining request that carries a connection identifier of the TCP connection, where the obtaining request is used to instruct the key server to determine the UE according to the connection identifier, forward the obtaining request to the UE, receive the encryption context sent by the UE according to the connection identifier, and forward the encryption context to the proxy node; and the receiver is further configured to receive the encryption context forwarded by the key server; or
the transmitter is further configured to send, to the UE, an obtaining request that carries a connection identifier of the TCP connection, where the obtaining request is used to instruct the UE to send the encryption context to a key server according to the connection identifier, and the encryption context is used to instruct the key server to forward the encryption context to the proxy node; and the receiver is further configured to receive the encryption context forwarded by the key server; or
the receiver is further configured to receive the encryption context forwarded by a key server, where the encryption context is forwarded to the proxy node after the key server receives the encryption context and a connection identifier of the TCP connection that are sent by the UE and determines, according to a correspondence, the proxy node corresponding to the connection identifier, and the correspondence is used to indicate a relationship between the connection identifier and the proxy node.

According to a sixth aspect, a service processing apparatus is provided and applied to user equipment UE. The apparatus includes: a bus, and a processor, a memory, a transmitter, and a receiver that are connected to the bus, where the memory is configured to store several instructions, and the processor is configured to execute the instructions;
the processor is configured to set up, in a connection setup process between the UE and a network server, a first encrypted connection to a proxy node that is in place of the network server, where the proxy node is configured to set up a second encrypted connection to the network server;
the transmitter is configured to provide the proxy node with an encryption context that is generated in the process of setting up the first encrypted connection, where the encryption context is used to instruct the proxy node to generate a first key according to the encryption context; and the processor is further configured to generate a second key according to the encryption context, where the second key corresponds to the first key;
the processor is further configured to encrypt service information by using the second key; and
the transmitter is further configured to send a ciphertext obtained by the processor to the proxy node, where the ciphertext is used to instruct the proxy node to decrypt the ciphertext by using the first key, process the obtained service information, and send the processed service information to the network server by using the second encrypted connection.

In a first possible implementation of the sixth aspect, the transmitter is further configured to send a Transmission Control Protocol TCP setup request to the network server, where the TCP setup request includes an Internet Protocol IP address of the UE and an IP address of the network server;
the processor is further configured to set up, according to the IP address of the network server that is obtained by the proxy node after the proxy node intercepts the TCP setup request, a TCP connection to the proxy node that is in place of the network server, where the proxy node is configured to set up, in place of the UE, a TCP connection to the network server according to the IP address of the UE;
the transmitter is further configured to send an encryption setup request to the network server by using the TCP connection; and
the processor is further configured to set up, according to the encryption setup request intercepted by the proxy node, the first encrypted connection to the proxy node that is in place of the network server, where the proxy node is configured to set up, in place of the UE, the second encrypted connection to the network server according to the encryption setup request; or
the transmitter is further configured to send a TCP setup request to the network server, where the TCP setup request includes an IP address of the UE and an IP address of the network server;
the processor is further configured to set up, according to the IP address of the network server that is obtained by the proxy node after the proxy node intercepts the TCP setup request, a TCP connection to the proxy node that is in place of the network server, where the proxy node is configured to set up a TCP connection to the network server according to an IP address of the proxy node;
the transmitter is further configured to send an encryption setup request to the network server by using the TCP connection; and
the processor is further configured to set up, according to the encryption setup request intercepted by the proxy node, the first encrypted connection to the proxy node that is in place of the network server, where the proxy node is configured to set up the second encrypted connection to the network server according to the IP address of the proxy node.

In a second possible implementation of the sixth aspect, the transmitter is further configured to send a TCP setup request to a tunnel gateway, where the TCP setup request includes an IP address of the UE and an IP address of the tunnel gateway, and the tunnel gateway is located between the proxy node and the network server;
the processor is further configured to set up, according to the IP address of the tunnel gateway that is obtained by the proxy node after the proxy node intercepts the TCP setup request, a TCP connection to the proxy node that is in place of the tunnel gateway, where the proxy node is configured to set up, in place of the UE, a TCP connection to the tunnel gateway according to the IP address of the UE, and trigger the tunnel gateway to set up a TCP connection to the network server according to the IP address of the tunnel gateway;
the transmitter is further configured to send an encryption setup request to the tunnel gateway by using the TCP connection, where the encryption setup request includes the IP address of the UE and an IP address of the network server; and
the processor is further configured to set up, according to the IP address of the network server that is obtained by the proxy node after the proxy node intercepts the encryption setup request, the first encrypted connection to the proxy node that is in place of the network server, where the proxy node is configured to forward the encryption setup request to the tunnel gateway by using the TCP connection, and the encryption setup request is used to instruct the tunnel gateway to forward the encryption setup request to the network server by using the TCP connection and instruct the network server to set up the second encrypted connection to the proxy node that is in place of the UE.

In a third possible implementation of the sixth aspect, the processor is further configured to set up a TCP connection to a tunnel gateway, where the tunnel gateway is configured to send a TCP setup request to the network server, the TCP setup request includes an IP address of the tunnel gateway and an IP address of the network server, the tunnel gateway is configured to set up, according to the IP address of the network server that is obtained by the proxy node after the proxy node intercepts the TCP setup request, a TCP connection to the proxy node that is in place of the network server, the proxy node is configured to set up, in place of the tunnel gateway, a TCP connection to the network server according to the IP address of the tunnel gateway, and the tunnel gateway is located between the UE and the proxy node;
the transmitter is further configured to send an encryption setup request to the tunnel gateway by using the TCP connection, where the encryption setup request is used to instruct the tunnel gateway to forward the encryption setup request to the network server, and the encryption setup request includes an IP address of the UE and the IP address of the network server; and
the processor is further configured to set up, according to the IP address of the network server that is obtained by the proxy node after the proxy node intercepts the encryption setup request, the first encrypted connection to the proxy node that is in place of the network server, where the proxy node is configured to forward the encryption setup request to the network server by using the TCP connection, and the encryption setup request is used to instruct the network server to set up the second encrypted connection to the proxy node that is in place of the UE.

With reference to the first possible implementation of the sixth aspect, or the second possible implementation of the sixth aspect, or the third possible implementation of the sixth aspect, in a first possible implementation of the sixth aspect, the receiver is configured to receive an obtaining request that carries a connection identifier of the TCP connection and is forwarded by a key server, and the transmitter is further configured to send the encryption context to the key server according to the connection identifier, where the encryption context is used to instruct the key server to forward the encryption context to the proxy node, and the obtaining request is sent by the proxy node to the key server and is sent by the key server after the key server determines the UE according to the connection identifier; or
the receiver is configured to receive an obtaining request that carries a connection identifier of the TCP connection and is sent by the proxy node, and the transmitter is further configured to send the encryption context to a key server according to the connection identifier, where the encryption context is used to instruct the key server to forward the encryption context to the proxy node; or
the receiver is configured to send the encryption context and a connection identifier of the TCP connection to a key server, where the encryption context is forwarded to the proxy node after the key server determines, according to a correspondence, the proxy node corresponding to the connection identifier, and the correspondence is used to indicate a relationship between the connection identifier and the proxy node.

Beneficial effects of the technical solutions provided in the embodiments of the present invention are as follows:
A proxy node sets up, in place of a network server, a first encrypted connection to UE, obtains, from the UE, an encryption context generated in the process of setting up the first encrypted connection, and generates a first key according to the encryption context. The proxy node receives a ciphertext sent by the UE, decrypts the ciphertext by using the first key, and processes obtained service information. In this way, the proxy node may obtain the first key that the UE and the network server agree upon, decrypt, by using the first key, the ciphertext sent by the UE to the network server, and process the service information. Therefore, a problem that a proxy node cannot provide service optimization for UE because the proxy node cannot decrypt a ciphertext is resolved, and an effect of expanding a usage scope of service optimization is achieved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a method flowchart of a service processing method according to an embodiment of the present invention;
FIG. 2 is a method flowchart of a service processing method according to an embodiment of the present invention;
FIG. 3A is a method flowchart of a first service processing method according to an embodiment of the present invention;
FIG. 3B-1 and FIG. 3B-2 are a schematic diagram of an implementation of a first service processing method according to an embodiment of the present invention;

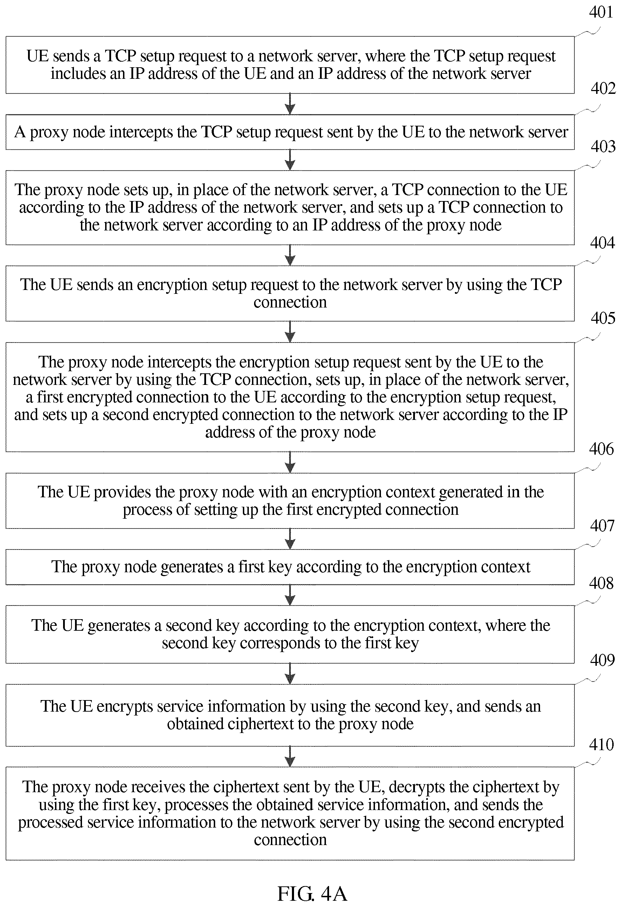

FIG. 4A is a method flowchart of a second service processing method according to an embodiment of the present invention;

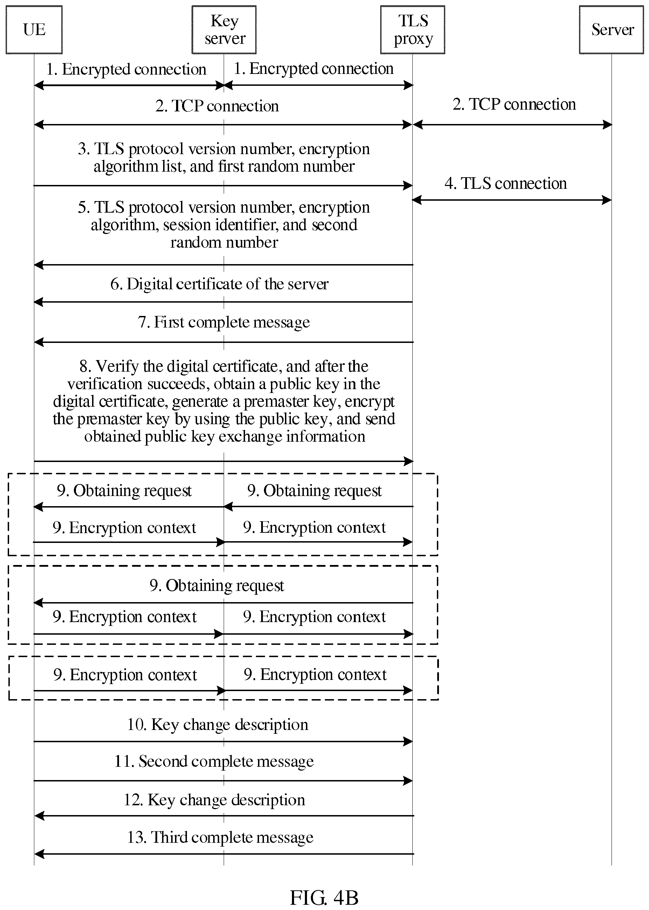

FIG. 4B is a schematic diagram of an implementation of a second service processing method according to an embodiment of the present invention;

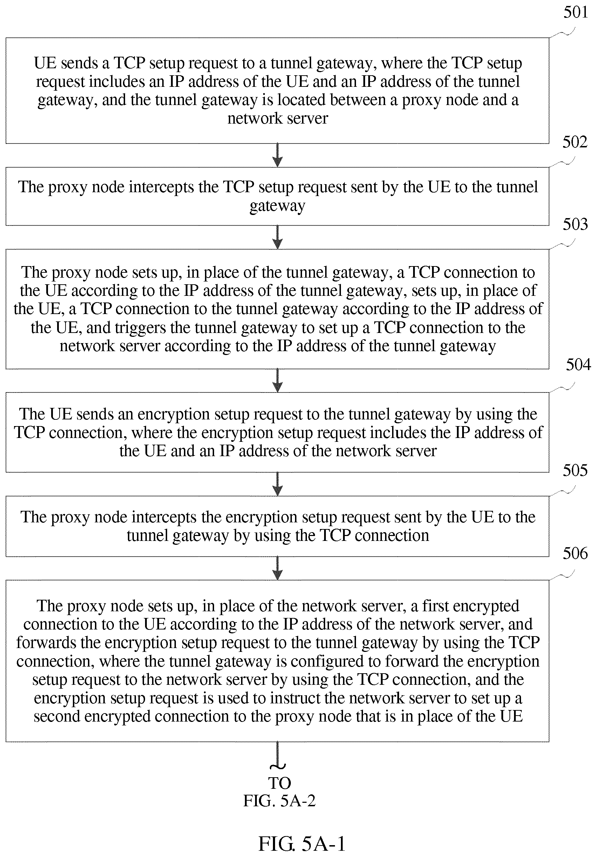

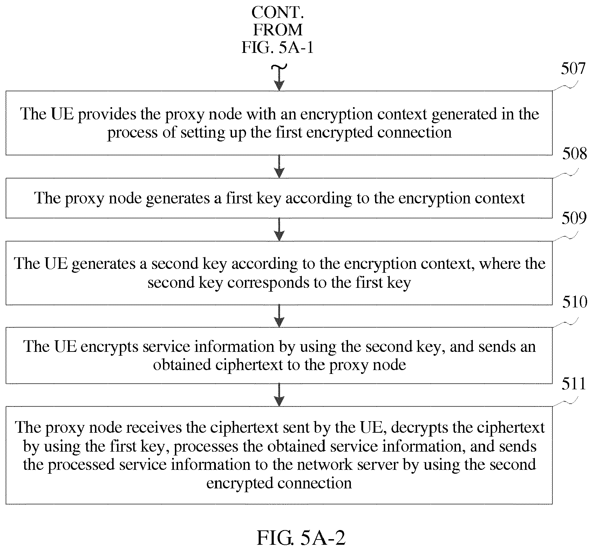

FIG. 5A-1 and FIG. 5A-2 are a method flowchart of a third service processing method according to an embodiment of the present invention;

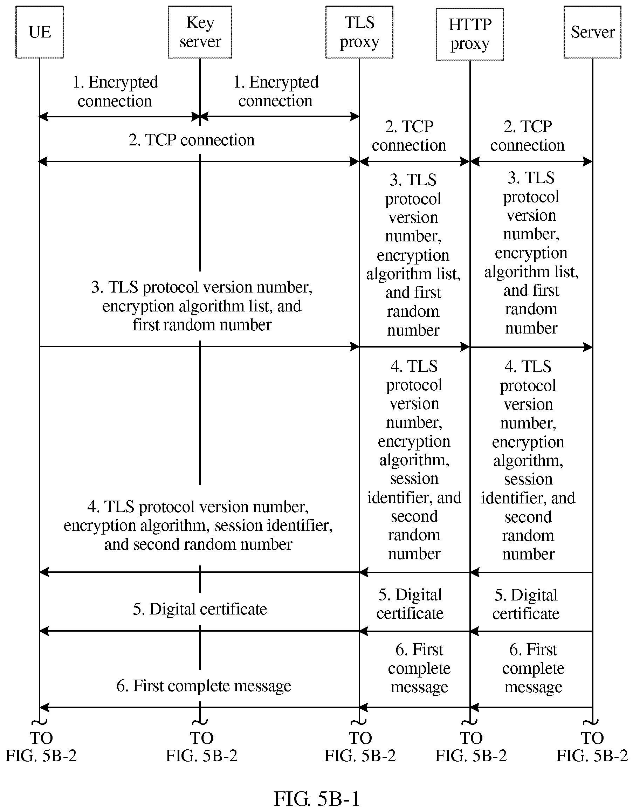

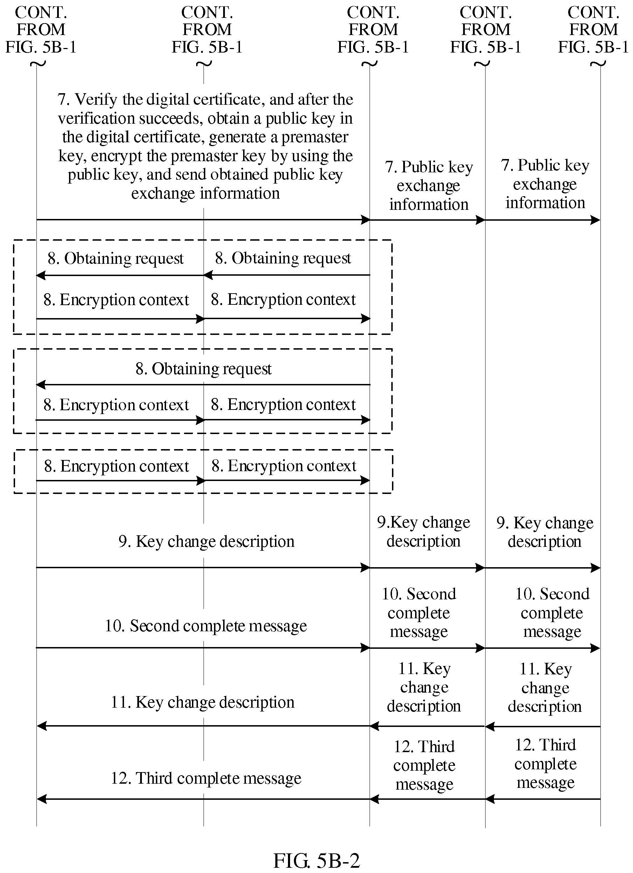

FIG. 5B-1 and FIG. 5B-2 are a schematic diagram of an implementation of a third service processing method according to an embodiment of the present invention;

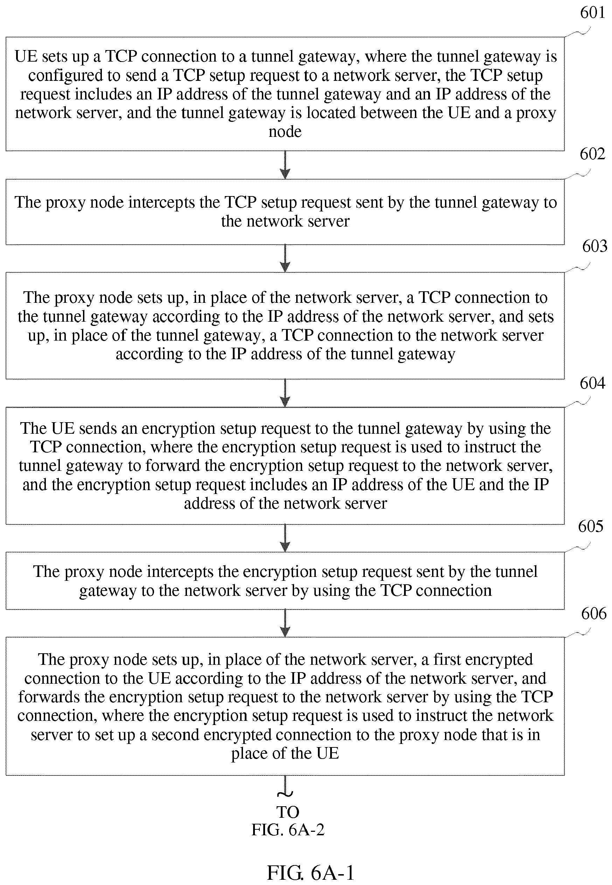

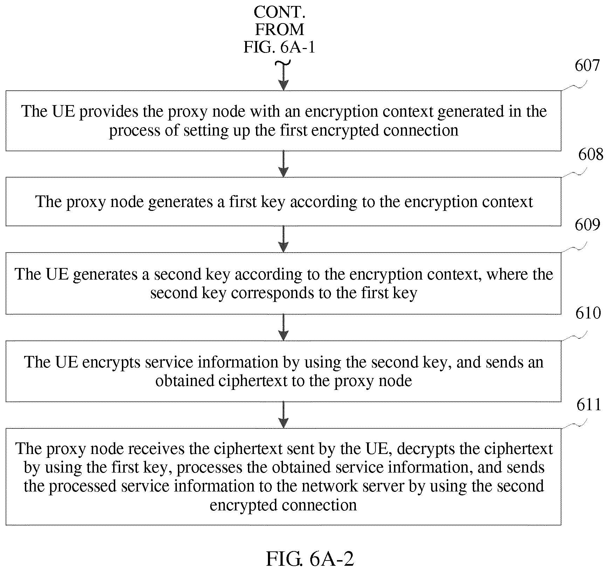

FIG. 6A-1 and FIG. 6A-2 are a method flowchart of a fourth service processing method according to an embodiment of the present invention;

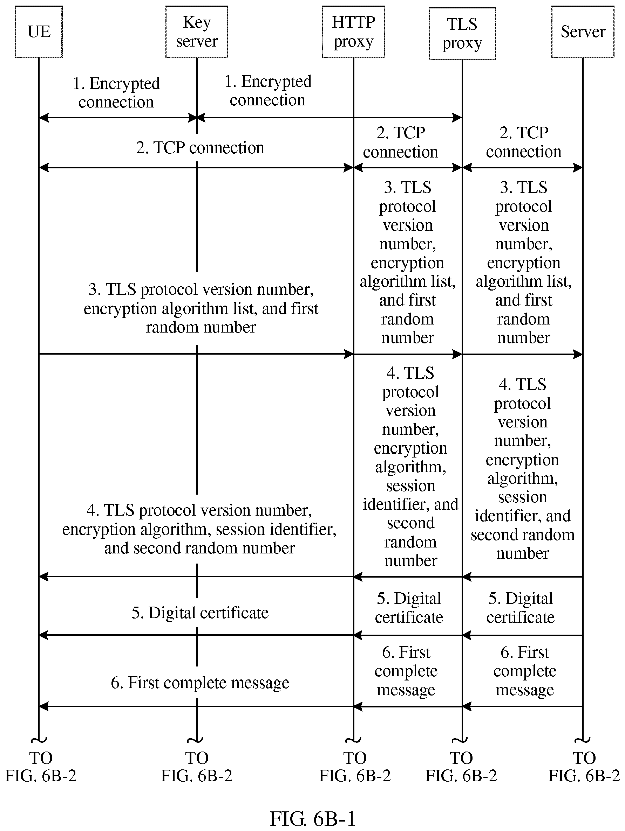

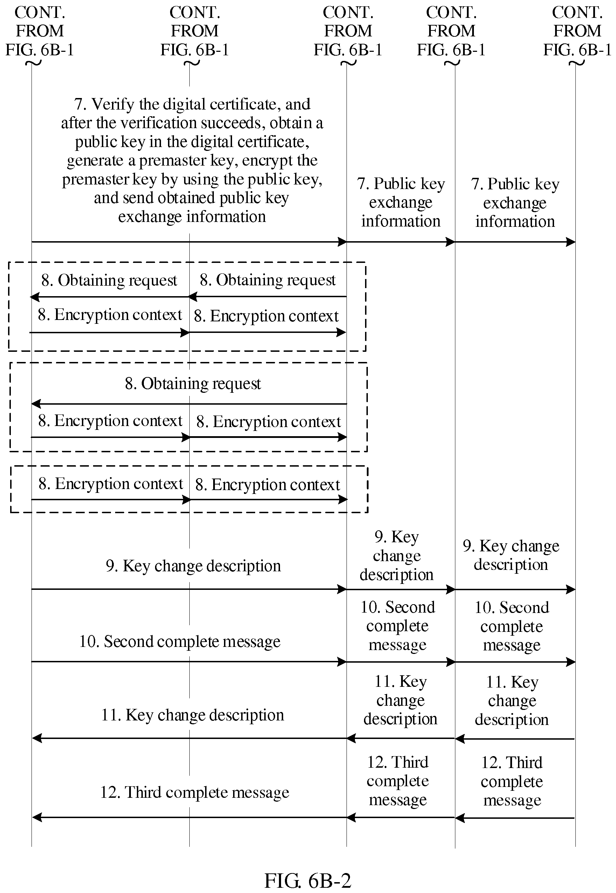

FIG. 6B-1 and FIG. 6B-2 are a schematic diagram of an implementation of a fourth service processing method according to an embodiment of the present invention;

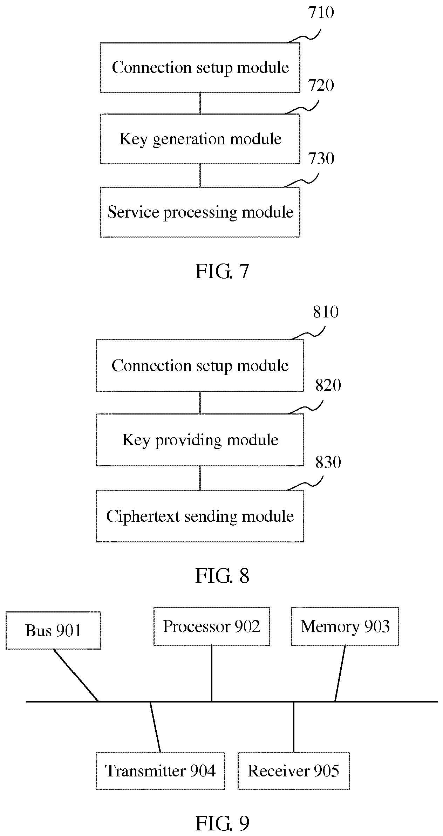

FIG. 7 is a schematic structural diagram of a service processing apparatus according to an embodiment of the present invention;
FIG. 8 is a schematic structural diagram of a service processing apparatus according to an embodiment of the present invention; and
FIG. 9 is a schematic structural diagram of a service processing apparatus according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

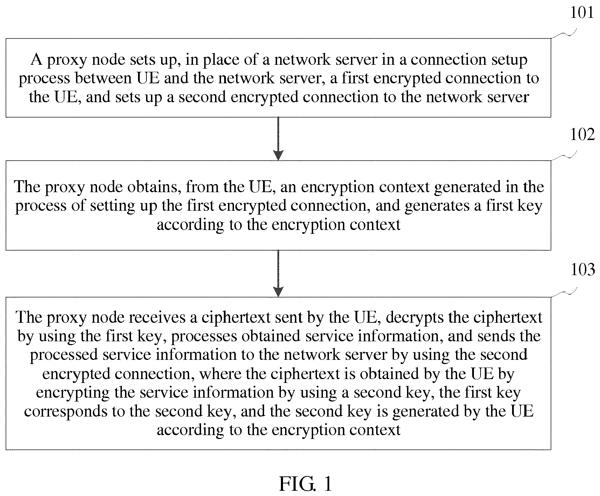

Referring to FIG. 1, FIG. 1 is a method flowchart of a service processing method according to an embodiment of the present invention. The service processing method may include the following steps:
Step 101: A proxy node sets up, in place of a network server in a connection setup process between UE and the network server, a first encrypted connection to the UE, and sets up a second encrypted connection to the network server.

Step 102: The proxy node obtains, from the UE, an encryption context generated in the process of setting up the first encrypted connection, and generates a first key according to the encryption context.

Step 103: The proxy node receives a ciphertext sent by the UE, decrypts the ciphertext by using the first key, processes obtained service information, and sends the processed service information to the network server by using the second encrypted connection, where the ciphertext is obtained by the UE by encrypting the service information by using a second key, the first key corresponds to the second key, and the second key is generated by the UE according to the encryption context.

In summary, in the service processing method provided in this embodiment of the present invention, a proxy node sets up, in place of a network server, a first encrypted connection to UE, obtains, from the UE, an encryption context generated in the process of setting up the first encrypted connection, and generates a first key according to the encryption context. The proxy node receives a ciphertext sent by the UE, decrypts the ciphertext by using the first key, and processes obtained service information. In this way, the proxy node may obtain the first key that the UE and the network server agree upon, decrypt, by using the first key, the ciphertext sent by the UE to the network server, and process the service information. Therefore, a problem that a proxy node cannot provide service optimization for UE because the proxy node cannot decrypt a ciphertext is resolved, and an effect of expanding a usage scope of service optimization is achieved.

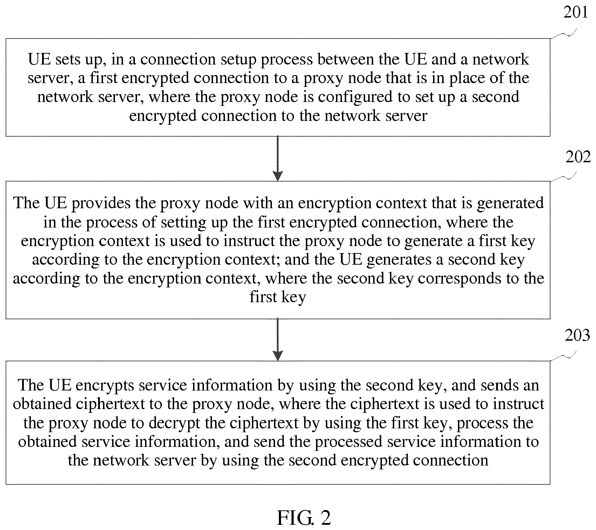

Referring to FIG. 2, FIG. 2 is a method flowchart of a service processing method according to an embodiment of the present invention. The service processing method may include the following steps:
Step 201: UE sets up, in a connection setup process between the UE and a network server, a first encrypted connection to a proxy node that is in place of the network server, where the proxy node is configured to set up a second encrypted connection to the network server.

Step 202: The UE provides the proxy node with an encryption context that is generated in the process of setting up the first encrypted connection, where the encryption context is used to instruct the proxy node to generate a first key according to the encryption context; and the UE generates a second key according to the encryption context, where the second key corresponds to the first key.

Step 203: The UE encrypts service information by using the second key, and sends an obtained ciphertext to the proxy node, where the ciphertext is used to instruct the proxy node to decrypt the ciphertext by using the first key, process the obtained service information, and send the processed service information to the network server by using the second encrypted connection.

In summary, in the service processing method provided in this embodiment of the present invention, UE sets up a first encrypted connection to a proxy node that is in place of a network server, and provides the proxy node with an encryption context that is generated in the process of setting up the first encrypted connection, where the encryption context is used to instruct the proxy node to generate a first key according to the encryption context. The UE encrypts service information by using a second key, and sends an obtained ciphertext to the proxy node, where the ciphertext is used to instruct the proxy node to decrypt the ciphertext by using the first key, and process the obtained service information, Therefore, a problem that a proxy node cannot provide service optimization for UE because the proxy node cannot decrypt a ciphertext is resolved, and an effect of expanding a usage scope of service optimization is achieved.

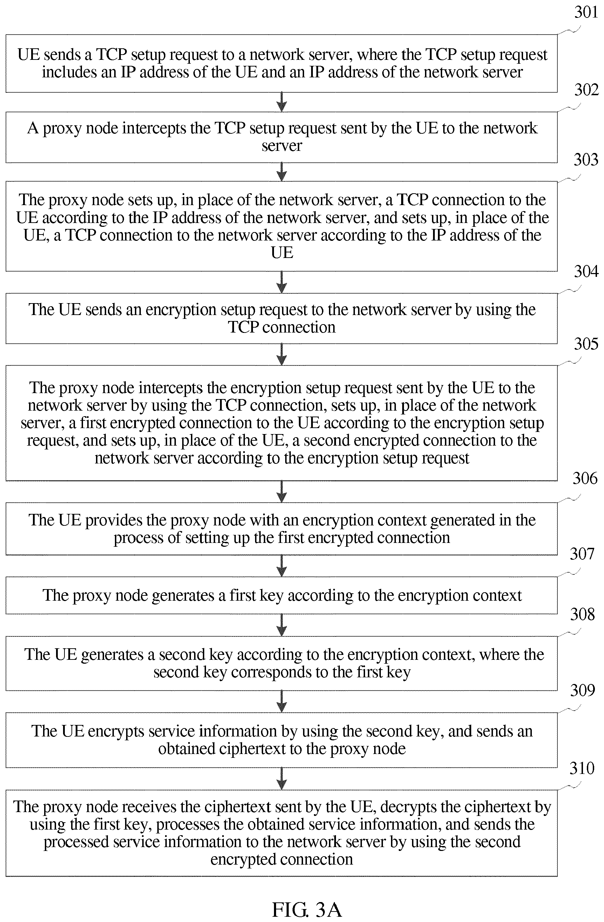

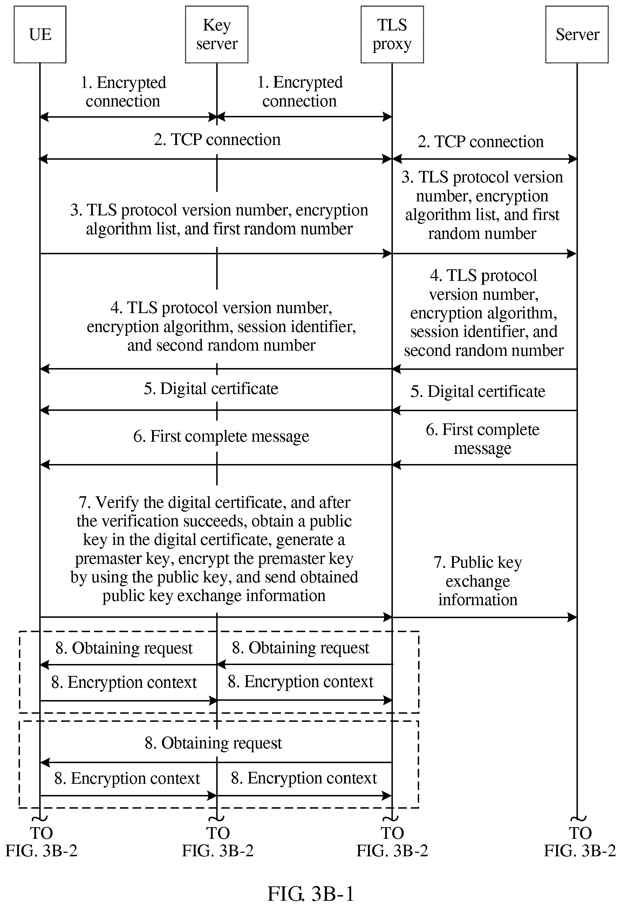

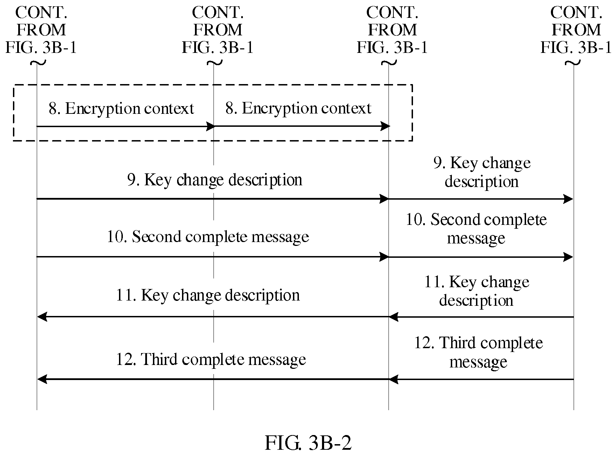

Referring to FIG. 3A, FIG. 3A is a method flowchart of another service processing method according to an embodiment of the present invention. The service processing method may include the following steps.

Step 301: UE sends a Transmission Control Protocol (Transmission Control Protocol, TCP for short) setup request to a network server, where the TCP setup request includes an Internet Protocol (Internet Protocol, IP for short) address of the UE and an IP address of the network server.

If the UE needs to access the network server, the UE needs to first set up a connection to the network server. The connection may be an unencrypted connection based on the Hypertext Transfer Protocol (hyper text transfer protocol, HTTP for short), or may be an encrypted connection based on the Hypertext Transfer Security Protocol over the SSL/TLS protocol used at a lower layer (hyper text transfer protocol over secure socket layer, HTTPS for short). Then the UE accesses the network server by using the connection. This embodiment is described by using an example in which a user agent sets up an encrypted connection to the network server. Because a TCP connection needs to be first set up before the encrypted connection is set up, the UE needs to first send a TCP setup request to the network server.

Information in the TCP setup request includes: a source IP address, a source port, a destination IP address, and a destination port. A source is the UE, and a destination is the network server. Ports of the TCP connection include a port 80 and a port 443. If the user agent needs to access the network server based on the HTTP protocol, the port of the TCP connection is the port 80. If the user agent needs to access the network server based on the HTTPS protocol, the port of the TCP connection is the port 443. This embodiment is described by using an example in which the user agent accesses the network server based on the HTTPS protocol. In this case, the port of the TCP connection is the port 443.

Step 302: A proxy node intercepts the TCP setup request sent by the UE to the network server.

Step 303: The proxy node sets up, in place of the network server, a TCP connection to the UE according to the IP address of the network server, and sets up, in place of the UE, a TCP connection to the network server according to the IP address of the UE.

Specifically, in a three-way handshake phase of a TCP connection, the proxy node uses the IP address of the network server as a source IP address of the proxy node and the IP address of the UE as a destination IP address, interacts with the UE to complete a three-way handshake, and sets up, in place of the network server, a TCP connection to the UE.

The proxy node sends a TCP setup request to the network server. A source IP address in the TCP setup request is the IP address of the UE, and a destination IP address is the IP address of the network server. In a three-way handshake phase of a TCP connection, the proxy node uses the IP address of the UE as a source IP address of the proxy node and the IP address of the network server as a destination IP address, interacts with the network server to complete a three-way handshake, and sets up, in place of the UE, a TCP connection to the network server.

Step 304: The UE sends an encryption setup request to the network server by using the TCP connection.

After the TCP connection between the UE and the proxy node and the TCP connection between the proxy node and the network server are set up, a path is formed between the UE, the proxy node, and the network server. In this case, the UE may send the encryption setup connection to the network server by using the TCP connections.

Step 305: The proxy node intercepts the encryption setup request sent by the UE to the network server by using the TCP connection, sets up, in place of the network server, a first encrypted connection to the UE according to the encryption setup request, and sets up, in place of the UE, a second encrypted connection to the network server according to the encryption setup request.

Because the process of setting up an encrypted connection based on the SSL protocol is similar to the process of setting up an encrypted connection based on the TLS protocol, the following uses an encrypted connection based on the TLS protocol as an example for description.
(1) The proxy node intercepts a TLS protocol version number, an encryption algorithm list, and a first random number that are sent by the UE to the network server, and forwards the TLS protocol version number, the encryption algorithm list, and the first random number to the network server.
(2) If the network server supports the TLS protocol version, the network server selects an encryption algorithm from the encryption algorithm list, and sends the TLS protocol version number, the encryption algorithm, a session identifier, and a second random number to the UE.
(3) The proxy node intercepts the TLS protocol version number, the encryption algorithm, the session identifier, and the second random number that are sent by the network server to the UE, and forwards the TLS protocol version number, the encryption algorithm, the session identifier, and the second random number to the UE.
(4) The proxy node intercepts a digital certificate of the network server that is sent by the network server to the UE, and forwards the digital certificate to the UE.
(5) The proxy node intercepts a first complete message sent by the network server to the UE, and forwards the first complete message to the UE.
(6) The UE verifies the digital certificate, and after the verification succeeds, obtains a public key in the digital certificate, generates a premaster key, encrypts the premaster key by using the public key, and sends obtained public key exchange information to the network server.
   In this case, the UE generates a second key according to the first random number, the second random number, the premaster key, and the encryption algorithm. In this embodiment, the first random number, the second random number, the premaster key, and the encryption algorithm are referred to as an encryption context, or the premaster key is referred to as an encryption context in this embodiment.
(7) The proxy node intercepts the public key exchange information sent by the UE to the network server, and forwards the public key exchange information to the network server.
(8) The proxy node intercepts a key change description sent by the UE to the network server, forwards the key change description to the network server, and instructs the network server to use negotiated parameters.
(9) The proxy node intercepts a second complete message sent by the UE to the network server, and forwards the second complete message to the network server.
   The second complete message includes a hash value, so that the network server performs verification according to the hash value. The hash value is obtained by the UE by performing a hash operation on all content sent to the network server.
(10) The proxy node intercepts a key change description sent by the network server to the UE, forwards the key change description to the UE, and instructs the UE to use negotiated parameters.
   In this case, the network server decrypts the public key exchange information by using a private key, so as to obtain the premaster key, and generates a first key according to the first random number, the second random number, the premaster key, and the encryption algorithm.
(11) The proxy node intercepts a third complete message sent by the network server to the UE, and forwards the third complete message to the UE.

The third complete message includes a hash value, so that the UE performs verification according to the hash value. The hash value is obtained by the network server by performing a hash operation on all content sent to the UE.

Step 306: The UE provides the proxy node with an encryption context generated in the process of setting up the first encrypted connection.

Although the proxy node sets up, in place of the network server, the first encrypted connection to the UE according to the encryption setup request, and sets up, in place of the UE, the second encrypted connection to the network server, the proxy node does not have the private key of the network server. Therefore, the proxy node cannot decrypt the public key exchange information, and cannot obtain the first key. In this embodiment, the proxy node may obtain the encryption context from the UE, and compute the first key according to the encryption context. A latest time for performing the step of computing the first key by the proxy node is a time at which a ciphertext sent by the UE is received. The ciphertext is obtained by the UE after the UE encrypts service information by using the second key. In a possible implementation, the proxy node computes the first key in the process of setting up an encrypted connection. In this way, after the ciphertext is received, the proxy node may directly use the first key to decrypt the ciphertext, so as to increase a speed of responding to the service information.

In this embodiment, the UE needs to provide the proxy node with the encryption context by using a key server. The key server is configured to manage the encryption context, and may be a trusted and authoritative server such as a server of an operator. For example, a domain name of the key server is KeyServerl.node.epc.mnc<MNC>.mcc<MCC>.3gppnetwork.org.

Generally, the key server and the proxy node belong to a same operator, and the key server and the proxy node may be deployed on a same entity, or may be deployed on different entities. This is not limited in this embodiment. When the key server and the proxy node are deployed on different entities, the UE and the proxy node need to set up an encrypted connection to the key server separately. Interaction between the UE and the key server may be based on the SSL/TLS protocol, Internet Protocol Security (Internet Protocol Security, IPSEC for short), a non-access stratum (Non-access stratum, NAS for short) message, or the like. Interaction between the proxy node and the key server may be based on the SSL/TLS protocol, IPSEC, or the like. The UE may set up an encrypted connection to the key server during power-on, or may set up an encrypted connection to the key server in a communication process.

Before the UE sets up the encrypted connection to the key server, the UE further needs to discover the key server first. This embodiment provides three manners of discovering the key server by the UE. The following describes the three discovery manners separately.

In a first discovery manner, IP addresses or domain names of multiple key servers are configured in the UE, and the UE may set up an encrypted connection to the key servers in turn according to the IP addresses or the domain names.

In a second discovery manner, the proxy node may determine a key server serving the proxy node, for example, a key server closest to the proxy node, and send a server identifier of the key server to the UE. The UE sets up an encrypted connection to the key server according to the server identifier.

In a third implementation, when the proxy node and the key server are both located in a PDN gateway (PDN GateWay, PGW for short), because the UE needs to access the PGW, the PGW allocates an IP address to the UE. Therefore, the UE may directly determine the key server, and set up an encrypted connection to the key server.

This embodiment provides three implementations of providing the proxy node with the encryption context by the UE. The following describes the three implementations separately.

In a first implementation, the proxy node sends, to the key server, an obtaining request that carries a connection identifier of the TCP connection, where the obtaining request is used to instruct the key server to determine the UE according to the connection identifier and forward the obtaining request to the UE. The UE receives the obtaining request that carries the connection identifier of the TCP connection and is forwarded by the key server, and sends the encryption context to the key server according to the connection identifier. The key server is configured to forward the encryption context to the proxy node. The proxy node receives the encryption context forwarded by the key server.

The connection identifier is used to identify the TCP connection. For example, the connection identifier may be an IP quintuple. In this case, the IP quintuple includes: a source IP address, a source port, a destination IP address, a destination port, and the Transmission Control Protocol TCP. The key server may determine the UE according to the source IP address, and forward the obtaining request to the UE. After receiving the obtaining request, the UE determines the network server according to the destination IP address, and then obtains the encryption context of the first encrypted connection set up to the proxy node that is in place of the network server. The UE sends the encryption context to the key server. Because the proxy node adds an IP address of the proxy node to the obtaining request when sending the obtaining request to the key server, the key server forwards the encryption context to the proxy node according to the IP address.

In a second implementation, the proxy node sends, to the UE, an obtaining request that carries a connection identifier of the TCP connection. The UE receives the obtaining request that carries the connection identifier of the TCP connection and is sent by the proxy node, and sends the encryption context to the key server according to the connection identifier. The encryption context is used to instruct the key server to forward the encryption context to the proxy node. The proxy node receives the encryption context forwarded by the key server.

The obtaining request further includes an IP address of the proxy node, so that the UE sends the IP address of the proxy node and the encryption context to the key server after the UE determines the encryption context according to the connection identifier. The key server determines the proxy node according to the IP address of the proxy node, and sends the encryption context to the proxy node. Alternatively, when the proxy node is deployed in the PGW and the PGW allocates an IP address to the UE, the key server stores a correspondence between the PGW and the UE. After receiving the encryption context and the IP address of the UE that are sent by the UE, the key server determines the proxy node according to the UE and the correspondence, and then sends the encryption context to the proxy node.

After allocating the IP address to the UE, the PGW may push the correspondence between the PGW and the UE to the key server; or the key server may request the correspondence between the PGW and the UE from the PGW periodically. Alternatively, after receiving the encryption context and the IP address of the UE, the PGW may request the correspondence between the PGW and the UE from the PGW, or the like. This is not limited in this embodiment.

In a third implementation, the UE sends the encryption context and a connection identifier of the TCP connection to the key server, where the encryption context is forwarded by the key server to the proxy node after the key server determines the proxy node corresponding to the connection identifier, and the proxy node receives the encryption context forwarded by the key server, where the correspondence is used to indicate a relationship between the connection identifier and the proxy node.

After generating the encryption context, the UE may push the encryption context and the IP address of the UE to the key server. The key server stores the correspondence between the PGW and the UE. After receiving the encryption context and the IP address of the UE that are sent by the UE, the key server determines the proxy node according to the UE and the correspondence, and then sends the encryption context to the proxy node. A process of obtaining the correspondence between the PGW and the UE by the key server is described in the second implementation, and details are not described herein.

Optionally, the UE may further push the encryption context and the IP address of the UE to the key server after a trigger condition is met. For example, when the UE detects that a currently accessed network is a third generation (third generation, 3G for short) mobile communications network, and not a Wireless Fidelity (Wireless Fidelity, WiFi for short) network, the UE pushes the encryption context and the IP address of the UE to the key server.

It should be noted that, when the proxy node and the key server are deployed on a same entity, the proxy node and the key server may interact by using an internal module; and data transmitted between the UE and the key server needs to be encrypted. When the proxy node and the key server are deployed on different entities, data transmitted between the proxy node and the key server needs to be encrypted, and data transmitted between the UE and the key server needs to be encrypted. Details are not described in this embodiment.

In addition, when multiple proxy nodes serve the UE simultaneously, to provide the encryption context for the multiple proxy nodes, the UE needs to set up an encrypted connection only to the key server.

Step 307: The proxy node generates a first key according to the encryption context.

When the encryption context obtained by the proxy node is the premaster key, the proxy node may read the first random number, the second random number, and the encryption algorithm that are cached in the process of setting up the first encrypted connection, and generate the first key according to the first random number, the second random number, the premaster key, and the encryption algorithm. Alternatively, when the encryption context obtained by the proxy node includes the first random number, the second random number, the premaster key, and the encryption algorithm, the proxy node directly generates the first key according to the first random number, the second random number, the premaster key, and the encryption algorithm.

Step 308: The UE generates a second key according to the encryption context, where the second key corresponds to the first key.

Step 308 may be performed in the process of setting up the first encrypted connection between the UE and the proxy node.

Step 309: The UE encrypts service information by using the second key, and sends an obtained ciphertext to the proxy node.

Step 310: The proxy node receives the ciphertext sent by the UE, decrypts the ciphertext by using the first key, processes the obtained service information, and sends the processed service information to the network server by using the second encrypted connection.

In this embodiment, the proxy node may selectively process the service information. For example, the proxy node processes service information sent to a network server 1, but does not process service information sent to a network server 2. This is not limited in this embodiment.

Optionally, when the UE roams, the key server and the proxy node may be on a visited network or may be on a home network. This is not limited in this embodiment.

Optionally, after the proxy node sends the service information to the network server by using the second encrypted connection, the proxy node may further receive service data sent by the network server by using the second encrypted connection. The proxy node encrypts the service data by using the first key, and sends an obtained ciphertext to the UE. The UE decrypts the ciphertext by using the second key, to obtain the service data.

Referring to FIG. 3B-1 and FIG. 3B-2, for ease of understanding, in this embodiment, an implementation process of this embodiment is described by using an example in which the key server is a KEY Server, the proxy node is a TLS proxy, and the network server is a server.
1. The UE sets up an encrypted connection to the key server, and the TLS proxy sets up an encrypted connection to the key server.
2. The UE sets up a TCP connection to the TLS proxy, and the TLS proxy sets up a TCP connection to the server.
   Specifically, the TLS proxy intercepts a TCP setup request sent by the UE to the server, sets up, in place of the server, a TCP connection to the UE according to the IP address of the server, and sets up, in place of the UE, a TCP connection to the server according to the IP address of the UE.
3. The TLS proxy intercepts a TLS protocol version number, an encryption algorithm list, and a first random number that are sent by the UE to the server, and forwards the TLS protocol version number, the encryption algorithm list, and the first random number to the server.
4. If the server supports the TLS protocol version, the server selects an encryption algorithm from the encryption algorithm list, and sends the TLS protocol version number, the encryption algorithm, a session identifier, and a second random number to the UE. The TLS proxy intercepts the TLS protocol version number, the encryption algorithm, the session identifier, and the second random number that are sent by the server to the UE, and forwards the TLS protocol version number, the encryption algorithm, the session identifier, and the second random number to the UE.
5. The server sends a digital certificate to the UE, and the TLS proxy intercepts the digital certificate, and forwards the digital certificate to the UE.
6. The server sends a first complete message to the UE, and the TLS proxy intercepts the first complete message, and forwards the first complete message to the UE.
7. The UE verifies the digital certificate, and after the verification succeeds, obtains a public key in the digital certificate, generates a premaster key, encrypts the premaster key by using the public key, and sends obtained public key exchange information to the server. The TLS proxy intercepts the public key exchange information, and forwards the public key exchange information to the server.
8. The TLS proxy sends an obtaining request to the key server; the key server forwards the obtaining request to the UE; the UE receives the obtaining request forwarded by the key server, and sends an encryption context to the key server; and the key server forwards the encryption context to the TLS proxy. Alternatively, the TLS proxy sends an obtaining request to the UE; the UE receives the obtaining request, and sends an encryption context to the key server; and the key server forwards the encryption context to the TLS proxy. Alternatively, the UE sends an encryption context to the key server; and the key server determines the TLS proxy and forwards the encryption context to the TLS proxy.
9. The UE sends a key change description to the server. The TLS proxy intercepts the key change description, and forwards the key change description to the server.
10. The UE sends a second complete message to the server. The TLS proxy intercepts the second complete message, and forwards the second complete message to the server.
11. The server sends a key change description to the UE. The TLS proxy intercepts the key change description, forwards the key change description to the UE, and instructs the UE to use negotiated parameters.
12. The server sends a third complete message to the UE. The TLS proxy intercepts the third complete message, and forwards the third complete message to the UE.

In summary, in the service processing method provided in this embodiment of the present invention, a proxy node sets up, in place of a network server, a first encrypted connection to UE, obtains, from the UE, an encryption context generated in the process of setting up the first encrypted connection, and generates a first key according to the encryption context. The proxy node receives a ciphertext sent by the UE, decrypts the ciphertext by using the first key, and processes obtained service information. In this way, the proxy node may obtain the first key that the UE and the network server agree upon, decrypt, by using the first key, the ciphertext sent by the UE to the network server, and process the service information. Therefore, a problem that a proxy node cannot provide service optimization for UE because the proxy node cannot decrypt a ciphertext is resolved, and an effect of expanding a usage scope of service optimization is achieved.

Referring to FIG. 4A, FIG. 4A is a method flowchart of another service processing method according to an embodiment of the present invention. The service processing method may include the following steps.

Step 401: UE sends a TCP setup request to a network server, where the TCP setup request includes an IP address of the UE and an IP address of the network server.

Step 402: A proxy node intercepts the TCP setup request sent by the UE to the network server.

Content of steps 401 and 402 is the same as content of steps 301 and 302, and details are not described herein.

Step 403: The proxy node sets up, in place of the network server, a TCP connection to the UE according to the IP address of the network server, and sets up a TCP connection to the network server according to an IP address of the proxy node.

For the process in which the proxy node sets up, in place of the network server, the TCP connection to the UE according to the IP address of the network server, refer to the description in step 303. Details are not described herein.

In this embodiment, the proxy node sets up the TCP connection to the network server according to the IP address of the proxy node. This process is the prior art, and details are not described in this embodiment.

Step 404: The UE sends an encryption setup request to the network server by using the TCP connection.

After the TCP connection between the UE and the proxy node and the TCP connection between the proxy node and the network server are set up, a path is formed between the UE, the proxy node, and the network server. In this case, the UE may send the encryption setup connection to the network server by using the TCP connections.

Step 405: The proxy node intercepts the encryption setup request sent by the UE to the network server by using the TCP connection, sets up, in place of the network server, a first encrypted connection to the UE according to the encryption setup request, and sets up a second encrypted connection to the network server according to the IP address of the proxy node.

Because the process of setting up an encrypted connection based on the SSL protocol is similar to the process of setting up an encrypted connection based on the TLS protocol, the following uses an encrypted connection based on the TLS protocol as an example to describe the process in which the proxy node sets up, in place of the network server, the first encrypted connection to the UE according to the encryption setup request.
(1) The proxy node intercepts a TLS protocol version number, an encryption algorithm list, and a first random number that are sent by the UE to the network server.
(2) If the proxy node supports the TLS protocol version, the proxy node selects an encryption algorithm from the encryption algorithm list, and sends the TLS protocol version number, the encryption algorithm, a session identifier, and a second random number to the UE.
(3) The proxy node obtains a digital certificate of the network server, and forwards the digital certificate to the UE.
(4) The proxy node sends a first complete message to the UE.
(5) The UE verifies the digital certificate, and after the verification succeeds, obtains a public key in the digital certificate, generates a premaster key, encrypts the premaster key by using the public key, and sends obtained public key exchange information to the network server.
   In this case, the UE generates a second key according to the first random number, the second random number, the premaster key, and the encryption algorithm. In this embodiment, the first random number, the second random number, the premaster key, and the encryption algorithm are referred to as an encryption context, or the premaster key is referred to as an encryption context in this embodiment.
(6) The proxy node intercepts the public key exchange information sent by the UE to the network server.
(7) The proxy node intercepts a key change description sent by the UE to the network server, and instructs the network server to use negotiated parameters.
(8) The proxy node intercepts a second complete message sent by the UE to the network server.
   The second complete message includes a hash value, so that the proxy node performs verification according to the hash value. The hash value is obtained by the UE by performing a hash operation on all content sent to the network server.
(9) The proxy node sends a key change description to the UE, and instructs the UE to use negotiated parameters.
(10) The proxy node sends a third complete message to the UE.

The third complete message includes a hash value, so that the UE performs verification according to the hash value. The hash value is obtained by the proxy node by performing a hash operation on all content sent to the UE.

The following uses an encrypted connection based on the TLS protocol as an example to describe the process in which the proxy node sets up the second encrypted connection to the network server according to the IP address of the proxy node.
(1) The proxy node sends a TLS protocol version number, an encryption algorithm list, and a first random number to the network server.
(2) If the network server supports the TLS protocol version, the network server selects an encryption algorithm from the encryption algorithm list, and sends the TLS protocol version number, the encryption algorithm, a session identifier, and a second random number to the proxy node.
(3) The network server sends a digital certificate of the network server to the proxy node.
(4) The network server sends a first complete message to the proxy node.
(5) The proxy node verifies the digital certificate, and after the verification succeeds, obtains a public key in the digital certificate, generates a premaster key, encrypts the premaster key by using the public key, and sends obtained public key exchange information to the network server.
   In this case, the proxy node generates a second key according to the first random number, the second random number, the premaster key, and the encryption algorithm. In this embodiment, the first random number, the second random number, the premaster key, and the encryption algorithm are referred to as an encryption context, or the premaster key is referred to as an encryption context in this embodiment.
(6) The proxy node sends the public key exchange information to the network server.
(7) The proxy node sends a key change description to the network server, and instructs the network server to use negotiated parameters.
(8) The proxy node sends a second complete message to the network server.
   The second complete message includes a hash value, so that the network server performs verification according to the hash value. The hash value is obtained by the proxy node by performing a hash operation on all content sent to the network server.
(9) The network server sends a key change description to the proxy node, and instructs the proxy node to use negotiated parameters.
(10) The network server sends a third complete message to the proxy node.

The third complete message includes a hash value, so that the proxy node performs verification according to the hash value. The hash value is obtained by the network server by performing a hash operation on all content sent to the UE.

Step 406: The UE provides the proxy node with an encryption context generated in the process of setting up the first encrypted connection.

This embodiment provides three implementations of providing the proxy node with the encryption context by the UE. The following describes the three implementations separately.

In a first implementation, the proxy node sends, to a key server, an obtaining request that carries a connection identifier of the TCP connection, where the obtaining request is used to instruct the key server to determine the UE according to the connection identifier and forward the obtaining request to the UE. The UE receives the obtaining request that carries the connection identifier of the TCP connection and is forwarded by the key server, and sends the encryption context to the key server according to the connection identifier; the key server is configured to forward the encryption context to the proxy node. The proxy node receives the encryption context forwarded by the key server.

In a second implementation, the proxy node sends, to the UE, an obtaining request that carries a connection identifier of the TCP connection. The UE receives the obtaining request that carries the connection identifier of the TCP connection and is sent by the proxy node, and sends the encryption context to a key server according to the connection identifier. The encryption context is used to instruct the key server to forward the encryption context to the proxy node. The proxy node receives the encryption context forwarded by the key server.

In a third implementation, the UE sends the encryption context and a connection identifier of the TCP connection to a key server, where the encryption context is forwarded by the key server to the proxy node after the key server determines the proxy node corresponding to the connection identifier, and the proxy node receives the encryption context forwarded by the key server, where the correspondence is used to indicate a relationship between the connection identifier and the proxy node.

Step 407: The proxy node generates a first key according to the encryption context.

Step 408: The UE generates a second key according to the encryption context, where the second key corresponds to the first key.

Step 409: The UE encrypts service information by using the second key, and sends an obtained ciphertext to the proxy node.

Step 410: The proxy node receives the ciphertext sent by the UE, decrypts the ciphertext by using the first key, processes the obtained service information, and sends the processed service information to the network server by using the second encrypted connection.

Content of steps 406 to 410 is the same as content of steps 306 to 310, and details are not described herein.

Referring to FIG. 4B, for ease of understanding, in this embodiment, an implementation process of this embodiment is described by using an example in which the key server is a KEY Server, the proxy node is a TLS proxy, and the network server is a server.
1. The UE sets up an encrypted connection to the key server, and the TLS proxy sets up an encrypted connection to the key server.
2. The UE sets up a TCP connection to the TLS proxy, and the TLS proxy sets up a TCP connection to the server.
   Specifically, the TLS proxy intercepts a TCP setup request sent by the UE to the server, sets up, in place of the server, a TCP connection to the UE according to the IP address of the server, and sets up a TCP connection to the server according to the IP address of the TLS proxy.
3. The TLS proxy intercepts a TLS protocol version number, an encryption algorithm list, and a first random number that are sent by the UE to the server.
4. The TLS proxy sets up a TLS connection to the server according to the IP address of the TLS proxy.
5. If the TLS proxy supports the TLS protocol version, the TLS proxy selects an encryption algorithm from the encryption algorithm list, and sends the TLS protocol version number, the encryption algorithm, a session identifier, and a second random number to the UE.
6. The TLS proxy sends a digital certificate of the server to the UE.
7. The TLS proxy sends a first complete message to the UE.
8. The UE verifies the digital certificate, and after the verification succeeds, obtains a public key in the digital certificate, generates a premaster key, encrypts the premaster key by using the public key, and sends obtained public key exchange information to the server. The TLS proxy intercepts the public key exchange information.
9. The TLS proxy sends an obtaining request to the key server; the key server forwards the obtaining request to the UE; the UE receives the obtaining request forwarded by the key server, and sends an encryption context to the key server; and the key server forwards the encryption context to the TLS proxy. Alternatively, the TLS proxy sends an obtaining request to the UE; the UE receives the obtaining request, and sends an encryption context to the key server; and the key server forwards the encryption context to the TLS proxy. Alternatively, the UE sends an encryption context to the key server; and the key server determines the TLS proxy and forwards the encryption context to the TLS proxy.
10. The UE sends a key change description to the server, and the TLS proxy intercepts the key change description.
11. The UE sends a second complete message to the server, and the TLS proxy intercepts the second complete message.
12. The TLS proxy sends a key change description to the UE, and instructs the UE to use negotiated parameters.
13. The TLS proxy sends a third complete message to the UE.

In summary, in the service processing method provided in this embodiment of the present invention, a proxy node sets up, in place of a network server, a first encrypted connection to UE, obtains, from the UE, an encryption context generated in the process of setting up the first encrypted connection, and generates a first key according to the encryption context. The proxy node receives a ciphertext sent by the UE, decrypts the ciphertext by using the first key, and processes obtained service information. In this way, the proxy node may obtain the first key that the UE and the network server agree upon, decrypt, by using the first key, the ciphertext sent by the UE to the network server, and process the service information. Therefore, a problem that a proxy node cannot provide service optimization for UE because the proxy node cannot decrypt a ciphertext is resolved, and an effect of expanding a usage scope of service optimization is achieved.

Referring to FIG. 5A-1 and FIG. 5A-2, FIG. 5A-1 and FIG. 5A-2 are a method flowchart of another service processing method according to an embodiment of the present invention. The service processing method may include the following steps.

Step 501: UE sends a TCP setup request to a tunnel gateway, where the TCP setup request includes an IP address of the UE and an IP address of the tunnel gateway, and the tunnel gateway is located between a proxy node and a network server.

A connect method is used to request to set up a TCP connection to the tunnel gateway to reach any network server and port, so that the tunnel gateway blindly forwards subsequent data between the UE and the network server. The tunnel gateway may be an HTTP proxy.

Step 502: The proxy node intercepts the TCP setup request sent by the UE to the tunnel gateway.

Step 503: The proxy node sets up, in place of the tunnel gateway, a TCP connection to the UE according to the IP address of the tunnel gateway, sets up, in place of the UE, a TCP connection to the tunnel gateway according to the IP address of the UE, and triggers the tunnel gateway to set up a TCP connection to the network server according to the IP address of the tunnel gateway.

Specifically, in a three-way handshake phase of a TCP connection, the proxy node uses the IP address of the tunnel gateway as a source IP address of the proxy node and the IP address of the UE as a destination IP address, interacts with the UE to complete a three-way handshake, and sets up, in place of the tunnel gateway, a TCP connection to the UE.

The proxy node sends a TCP setup request to the tunnel gateway, where a source IP address in the TCP setup request is the IP address of the UE, and a destination IP address is the IP address of the tunnel gateway. In a three-way handshake phase of a TCP connection, the proxy node uses the IP address of the UE as a source IP address of the proxy node and the IP address of the tunnel gateway as a destination IP address, interacts with the tunnel gateway to complete a three-way handshake, and sets up, in place of the UE, a TCP connection to the tunnel gateway.

In addition, the tunnel gateway further needs to send a TCP setup request to the network server. This process is the prior art, and details are not described in this embodiment.

Step 504: The UE sends an encryption setup request to the tunnel gateway by using the TCP connection, where the encryption setup request includes the IP address of the UE and an IP address of the network server.

After the TCP connection between the UE and the proxy node, the TCP connection between the proxy node and the tunnel gateway, and the TCP connection between the tunnel gateway and the network server are set up, a path is formed between the UE, the proxy node, the tunnel gateway, and the network server. In this case, the UE may send the encryption setup connection to the network server by using the TCP connections.

Step 505: The proxy node intercepts the encryption setup request sent by the UE to the tunnel gateway by using the TCP connection.

In this embodiment, because the UE cannot perceive existence of the proxy node, the UE considers that a TCP connection is set up to the tunnel gateway. Therefore, the UE sends the encryption setup request to the tunnel gateway by using the TCP connection, so that the tunnel gateway blindly forwards the encryption setup request to the network server. In this case, the proxy node may intercept the encryption setup request sent by the UE to the tunnel gateway by using the TCP connection.

When a domain name of the network server is www.ottserver.com, a connection method is: CONNECT www.ottserver.com:443 HTTP1.1. Certainly, the HTTP protocol version may be another protocol version in addition to 1.1, and is not limited in this embodiment.

Step 506: The proxy node sets up, in place of the network server, a first encrypted connection to the UE according to the IP address of the network server, and forwards the encryption setup request to the tunnel gateway by using the TCP connection, where the tunnel gateway is configured to forward the encryption setup request to the network server by using the TCP connection, and the encryption setup request is used to instruct the network server to set up a second encrypted connection to the proxy node that is in place of the UE.

For the process in which the proxy node sets up, in place of the network server, the first encrypted connection to the UE according to the IP address of the network server, refer to the description in step 305. Details are not described herein.

The proxy node further needs to forward the encryption setup request to the tunnel gateway. The tunnel gateway blindly forwards the encryption setup request to the network server. The network server sets up, according to the IP address of the UE that is carried in the encryption setup request, the second encrypted connection to the proxy node that is in place of the UE. For the process in which the proxy node sets up, in place of the UE, the second encrypted connection to the network server, refer to the description in step 305. Details are not described herein.

Step 507: The UE provides the proxy node with an encryption context generated in the process of setting up the first encrypted connection.

This embodiment provides three implementations of providing the proxy node with the encryption context by the UE. The following describes the three implementations separately.

In a first implementation, the proxy node sends, to a key server, an obtaining request that carries a connection identifier of the TCP connection, where the obtaining request is used to instruct the key server to determine the UE according to the connection identifier and forward the obtaining request to the UE. The UE receives the obtaining request that carries the connection identifier of the TCP connection and is forwarded by the key server, and sends the encryption context to the key server according to the connection identifier; the key server is configured to forward the encryption context to the proxy node. The proxy node receives the encryption context forwarded by the key server.

In a second implementation, the proxy node sends, to the UE, an obtaining request that carries a connection identifier of the TCP connection. The UE receives the obtaining request that carries the connection identifier of the TCP connection and is sent by the proxy node, and sends the encryption context to a key server according to the connection identifier. The encryption context is used to instruct the key server to forward the encryption context to the proxy node. The proxy node receives the encryption context forwarded by the key server.

In a third implementation, the UE sends the encryption context and a connection identifier of the TCP connection to a key server, where the encryption context is forwarded by the key server to the proxy node after the key server determines the proxy node corresponding to the connection identifier, and the proxy node receives the encryption context forwarded by the key server, where the correspondence is used to indicate a relationship between the connection identifier and the proxy node.

Step 508: The proxy node generates a first key according to the encryption context.

Step 509: The UE generates a second key according to the encryption context, where the second key corresponds to the first key.

Step 510: The UE encrypts service information by using the second key, and sends an obtained ciphertext to the proxy node.

Step 511: The proxy node receives the ciphertext sent by the UE, decrypts the ciphertext by using the first key, processes the obtained service information, and sends the processed service information to the network server by using the second encrypted connection.

Content of steps 507 to 511 is the same as content of steps 306 to 310, and details are not described herein.

Referring to FIG. 5B-1 and FIG. 5B-2, for ease of understanding, in this embodiment, an implementation process of this embodiment is described by using an example in which the key server is a KEY Server, the proxy node is a TLS proxy, the tunnel gateway is an HTTP proxy, and the network server is a server.
1. The UE sets up an encrypted connection to the key server, and the TLS proxy sets up an encrypted connection to the key server.
2. The UE sets up a TCP connection to the TLS proxy, the TLS proxy sets up a TCP connection to the HTTP proxy, and the HTTP proxy sets up a TCP connection to the server.
   Specifically, the TLS proxy intercepts a TCP setup request sent by the UE to the HTTP proxy, sets up, in place of the HTTP proxy, a TCP connection to the UE according to the IP address of the HTTP proxy, and sets up, in place of the UE, a TCP connection to the HTTP proxy according to the IP address of the UE. The HTTP proxy sets up a TCP connection to the server.
3. The TLS proxy intercepts a TLS protocol version number, an encryption algorithm list, and a first random number that are sent by the UE to the HTTP proxy, and forwards the TLS protocol version number, the encryption algorithm list, and the first random number to the HTTP proxy. The HTTP proxy forwards the TLS protocol version number, the encryption algorithm list, and the first random number to the server.
4. If the server supports the TLS protocol version, the server selects an encryption algorithm from the encryption algorithm list, and sends the TLS protocol version number, the encryption algorithm, a session identifier, and a second random number to the HTTP proxy. The TLS proxy intercepts the TLS protocol version number, the encryption algorithm, the session identifier, and the second random number that are sent by the HTTP proxy to the UE, and forwards the TLS protocol version number, the encryption algorithm, the session identifier, and the second random number to the UE.
5. The server sends a digital certificate to the HTTP proxy. The TLS proxy intercepts the digital certificate forwarded by the HTTP proxy to the UE, and forwards the digital certificate to the UE.
6. The server sends a first complete message to the HTTP proxy. The TLS proxy intercepts the first complete message forwarded by the HTTP proxy to the UE, and forwards the first complete message to the UE.
7. The UE verifies the digital certificate, and after the verification succeeds, obtains a public key in the digital certificate, generates a premaster key, encrypts the premaster key by using the public key, and sends obtained public key exchange information to the HTTP proxy. The TLS proxy intercepts the public key exchange information, and forwards the public key exchange information to the HTTP proxy. The HTTP proxy forwards the public key exchange information to the server.
8. The TLS proxy sends an obtaining request to the key server; the key server forwards the obtaining request to the UE; the UE receives the obtaining request forwarded by the key server, and sends an encryption context to the key server; and the key server forwards the encryption context to the TLS proxy. Alternatively, the TLS proxy sends an obtaining request to the UE; the UE receives the obtaining request, and sends an encryption context to the key server; and the key server forwards the encryption context to the TLS proxy. Alternatively, the UE sends an encryption context to the key server; and the key server determines the TLS proxy and forwards the encryption context to the TLS proxy.
9. The UE sends a key change description to the HTTP proxy. The TLS proxy intercepts the key change description, and forwards the key change description to the HTTP proxy. The HTTP proxy forwards the key change description to the server.
10. The UE sends a second complete message to the HTTP proxy. The TLS proxy intercepts the second complete message, and forwards the second complete message to the HTTP proxy. The HTTP proxy forwards the second complete message to the server.
11. The server sends a key change description to the HTTP proxy. The TLS proxy intercepts the key change description forwarded by the HTTP proxy to the UE, forwards the key change description to the UE, and instructs the UE to use negotiated parameters.
12. The server sends a third complete message to the HTTP proxy. The TLS proxy intercepts the third complete message forwarded by the HTTP proxy to the UE, and forwards the third complete message to the UE.

In summary, in the service processing method provided in this embodiment of the present invention, a proxy node sets up, in place of a network server, a first encrypted connection to UE, obtains, from the UE, an encryption context generated in the process of setting up the first encrypted connection, and generates a first key according to the encryption context. The proxy node receives a ciphertext sent by the UE, decrypts the ciphertext by using the first key, and processes obtained service information. In this way, the proxy node may obtain the first key that the UE and the network server agree upon, decrypt, by using the first key, the ciphertext sent by the UE to the network server, and process the service information. Therefore, a problem that a proxy node cannot provide service optimization for UE because the proxy node cannot decrypt a ciphertext is resolved, and an effect of expanding a usage scope of service optimization is achieved.

Referring to FIG. 6A-1 and FIG. 6A-2, FIG. 6A-1 and FIG. 6A-2 are a method flowchart of another service processing method according to an embodiment of the present invention. The service processing method may include the following steps.

Step 601: UE sets up a TCP connection to a tunnel gateway, where the tunnel gateway is configured to send a TCP setup request to a network server, the TCP setup request includes an IP address of the tunnel gateway and an IP address of the network server, and the tunnel gateway is located between the UE and a proxy node.

Because the tunnel gateway is located between the UE and the proxy node, the UE first sets up a TCP connection to the tunnel gateway. The TCP connection setup process is the prior art, and details are not described herein. After the TCP connection between the UE and the tunnel gateway is set up, the tunnel gateway needs to set up a TCP connection to the network server to ensure that a path is formed between the UE and the tunnel gateway and between the tunnel gateway and the network server.

Step 602: The proxy node intercepts the TCP setup request sent by the tunnel gateway to the network server.

Step 603: The proxy node sets up, in place of the network server, a TCP connection to the tunnel gateway according to the IP address of the network server, and sets up, in place of the tunnel gateway, a TCP connection to the network server according to the IP address of the tunnel gateway.

Specifically, in a three-way handshake phase of a TCP connection, the proxy node uses the IP address of the network server as a source IP address of the proxy node and the IP address of the tunnel gateway as a destination IP address, interacts with the tunnel gateway to complete a three-way handshake, and sets up, in place of the network server, a TCP connection to the tunnel gateway.

The proxy node sends a TCP setup request to the network server, where a source IP address in the TCP setup request is the IP address of the tunnel gateway, and a destination IP address is the IP address of the network server. In a three-way handshake phase of a TCP connection, the proxy node uses the IP address of the tunnel gateway as a source IP address of the proxy node and the IP address of the network server as a destination IP address, interacts with the network server to complete a three-way handshake, and sets up, in place of the tunnel gateway, a TCP connection to the network server.

Step 604: The UE sends an encryption setup request to the tunnel gateway by using the TCP connection, where the encryption setup request is used to instruct the tunnel gateway to forward the encryption setup request to the network server, and the encryption setup request includes an IP address of the UE and the IP address of the network server.

After the TCP connection between the UE and the proxy node, the TCP connection between the proxy node and the tunnel gateway, and the TCP connection between the tunnel gateway and the network server are set up, a path is formed between the UE, the proxy node, the tunnel gateway, and the network server. In this case, the UE may send the encryption setup connection to the network server by using the TCP connections.

Step 605: The proxy node intercepts the encryption setup request sent by the tunnel gateway to the network server by using the TCP connection.

Step 606: The proxy node sets up, in place of the network server, a first encrypted connection to the UE according to the IP address of the network server, and forwards the encryption setup request to the network server by using the TCP connection, where the encryption setup request is used to instruct the network server to set up a second encrypted connection to the proxy node that is in place of the UE.

For the process in which the proxy node sets up, in place of the network server, the first encrypted connection to the UE according to the IP address of the network server, refer to the description in step 305. Details are not described herein.

The proxy node further needs to forward the encryption setup request to the network server, and the network server sets up, according to the IP address of the UE that is carried in the encryption setup request, the second encrypted connection to the proxy node that is place of the UE. For the process in which the proxy node sets up, in place of the UE, the second encrypted connection to the network server, refer to the description in step 305. Details are not described herein.

Step 607: The UE provides the proxy node with an encryption context generated in the process of setting up the first encrypted connection.

This embodiment provides three implementations of providing the proxy node with the encryption context by the UE. The following describes the three implementations separately.

In a first implementation, the proxy node sends, to a key server, an obtaining request that carries a connection identifier of the TCP connection, where the obtaining request is used to instruct the key server to determine the UE according to the connection identifier and forward the obtaining request to the UE. The UE receives the obtaining request that carries the connection identifier of the TCP connection and is forwarded by the key server, and sends the encryption context to the key server according to the connection identifier; the key server is configured to forward the encryption context to the proxy node. The proxy node receives the encryption context forwarded by the key server.

In a second implementation, the proxy node sends, to the UE, an obtaining request that carries a connection identifier of the TCP connection. The UE receives the obtaining request that carries the connection identifier of the TCP connection and is sent by the proxy node, and sends the encryption context to a key server according to the connection identifier. The encryption context is used to instruct the key server to forward the encryption context to the proxy node. The proxy node receives the encryption context forwarded by the key server.

In a third implementation, the UE sends the encryption context and a connection identifier of the TCP connection to a key server, where the encryption context is forwarded by the key server to the proxy node after the key server determines the proxy node corresponding to the connection identifier, and the proxy node receives the encryption context forwarded by the key server, where the correspondence is used to indicate a relationship between the connection identifier and the proxy node.

Step 608: The proxy node generates a first key according to the encryption context.

Step 609: The UE generates a second key according to the encryption context, where the second key corresponds to the first key.

Step 610: The UE encrypts service information by using the second key, and sends an obtained ciphertext to the proxy node.

Step 611: The proxy node receives the ciphertext sent by the UE, decrypts the ciphertext by using the first key, processes the obtained service information, and sends the processed service information to the network server by using the second encrypted connection.

Content of steps 607 to 611 is the same as content of steps 306 to 310, and details are not described herein.

Referring to FIG. 6B-1 and FIG. 6B-2, for ease of understanding, in this embodiment, an implementation process of this embodiment is described by using an example in which the key server is a KEY Server, the proxy node is a TLS proxy, the tunnel gateway is an HTTP proxy, and the network server is a server.
1. The UE sets up an encrypted connection to the key server, and the TLS proxy sets up an encrypted connection to the key server.
2. The UE sets up a TCP connection to the HTTP proxy; the HTTP proxy sets up a TCP connection to the TLS proxy; and the TLS proxy sets up a TCP connection to the server.
   Specifically, the TLS proxy intercepts a TCP setup request sent by the HTTP proxy to the server, sets up, in place of the server, a TCP connection to the HTTP proxy according to the IP address of the server, and sets up, in place of the HTTP proxy, a TCP connection to the server according to the IP address of the HTTP proxy.
3. The UE sends a TLS protocol version number, an encryption algorithm list, and a first random number to the HTTP proxy. The TLS proxy intercepts the TLS protocol version number, the encryption algorithm list, and the first random number that are forwarded by the HTTP proxy to the server, and forwards the TLS protocol version number, the encryption algorithm list, and the first random number to the server.
4. If the server supports the TLS protocol version, the server selects an encryption algorithm from the encryption algorithm list. The TLS proxy intercepts the TLS protocol version number, the encryption algorithm, a session identifier, and a second random number that are sent by the server to the HTTP proxy, and forwards the TLS protocol version number, the encryption algorithm, the session identifier, and the second random number to the HTTP proxy. The HTTP proxy forwards the TLS protocol version number, the encryption algorithm, the session identifier, and the second random number to the UE.
5. The TLS proxy intercepts a digital certificate sent by the server to the HTTP proxy, and forwards the digital certificate to the HTTP proxy. The HTTP proxy forwards the digital certificate to the UE.
6. The TLS proxy intercepts a first complete message sent by the server to the HTTP proxy. The TLS proxy forwards the first complete message to the HTTP proxy. The HTTP proxy forwards the first complete message to the UE.
7. The UE verifies the digital certificate, and after the verification succeeds, obtains a public key in the digital certificate, generates a premaster key, encrypts the premaster key by using the public key, and sends obtained public key exchange information to the HTTP proxy. The TLS proxy intercepts the public key exchange information that is forwarded by the HTTP proxy to the server, and forwards the public key exchange information to the server.
8. The TLS proxy sends an obtaining request to the key server; the key server forwards the obtaining request to the UE; the UE receives the obtaining request forwarded by the key server, and sends an encryption context to the key server; and the key server forwards the encryption context to the TLS proxy. Alternatively, the TLS proxy sends an obtaining request to the UE; the UE receives the obtaining request, and sends an encryption context to the key server; and the key server forwards the encryption context to the TLS proxy. Alternatively, the UE sends an encryption context to the key server; and the key server determines the TLS proxy and forwards the encryption context to the TLS proxy.
9. The UE sends a key change description to the HTTP proxy. The TLS proxy intercepts the key change description that is forwarded by the HTTP proxy to the server, and forwards the key change description to the server.
10. The UE sends a second complete message to the HTTP proxy. The TLS proxy intercepts the second complete message, and forwards the second complete message to the HTTP proxy. The HTTP proxy forwards the second complete message to the server.
11. The TLS proxy intercepts a key change description sent by the server to the HTTP proxy. The TLS proxy forwards the key change description to the HTTP proxy. The HTTP proxy forwards the key change description to the UE, and instructs the UE to use negotiated parameters.
12. The TLS proxy intercepts a third complete message sent by the server to the HTTP proxy. The TLS proxy forwards the third complete message to the HTTP proxy. The HTTP proxy forwards the third complete message to the UE.

In summary, in the service processing method provided in this embodiment of the present invention, a proxy node sets up, in place of a network server, a first encrypted connection to UE, obtains, from the UE, an encryption context generated in the process of setting up the first encrypted connection, and generates a first key according to the encryption context. The proxy node receives a ciphertext sent by the UE, decrypts the ciphertext by using the first key, and processes obtained service information. In this way, the proxy node may obtain the first key that the UE and the network server agree upon, decrypt, by using the first key, the ciphertext sent by the UE to the network server, and process the service information. Therefore, a problem that a proxy node cannot provide service optimization for UE because the proxy node cannot decrypt a ciphertext is resolved, and an effect of expanding a usage scope of service optimization is achieved.

Referring to FIG. 7, FIG. 7 is a schematic structural diagram of a service processing apparatus according to an embodiment of the present invention. The service processing apparatus is applied to a proxy node. The service processing apparatus may include:
a connection setup module 710, configured to set up, in place of a network server in a connection setup process between UE and the network server, a first encrypted connection to the UE, and set up a second encrypted connection to the network server;
a key generation module 720, configured to obtain, from the UE, an encryption context generated in the process of setting up the first encrypted connection, and generate a first key according to the encryption context; and
a service processing module 730, configured to receive a ciphertext sent by the UE, decrypt the ciphertext by using the first key generated by the key generation module 720, process obtained service information, and send the processed service information to the network server by using the second encrypted connection, where the ciphertext is obtained by the UE by encrypting the service information by using a second key, the first key corresponds to the second key, and the second key is generated by the UE according to the encryption context.

In summary, the service processing apparatus provided in this embodiment of the present invention sets up, in place of a network server, a first encrypted connection to UE, obtains, from the UE, an encryption context generated in the process of setting up the first encrypted connection, and generates a first key according to the encryption context. The service processing apparatus receives a ciphertext sent by the UE, decrypts the ciphertext by using the first key, and processes obtained service information. In this way, the service processing apparatus may obtain the first key that the UE and the network server agree upon, decrypt, by using the first key, the ciphertext sent by the UE to the network server, and process the service information. Therefore, a problem that a proxy node cannot provide service optimization for UE because the proxy node cannot decrypt a ciphertext is resolved, and an effect of expanding a usage scope of service optimization is achieved.

Referring to FIG. 7, FIG. 7 is a schematic structural diagram of another service processing apparatus according to an embodiment of the present invention. The service processing apparatus is applied to a proxy node. The service processing apparatus may include:
a connection setup module 710, configured to set up, in place of a network server in a connection setup process between UE and the network server, a first encrypted connection to the UE, and set up a second encrypted connection to the network server;
a key generation module 720, configured to obtain, from the UE, an encryption context generated in the process of setting up the first encrypted connection, and generate a first key according to the encryption context; and
a service processing module 730, configured to receive a ciphertext sent by the UE, decrypt the ciphertext by using the first key generated by the key generation module 720, process obtained service information, and send the processed service information to the network server by using the second encrypted connection, where the ciphertext is obtained by the UE by encrypting the service information by using a second key, the first key corresponds to the second key, and the second key is generated by the UE according to the encryption context.

In a first possible implementation, the connection setup module 710 is specifically configured to:
intercept a TCP setup request sent by the UE to the network server, where the TCP setup request includes an IP address of the UE and an IP address of the network server;
set up, in place of the network server, a TCP connection to the UE according to the IP address of the network server, and set up, in place of the UE, a TCP connection to the network server according to the IP address of the UE; and
intercept an encryption setup request sent by the UE to the network server by using the TCP connection, set up, in place of the network server, the first encrypted connection to the UE according to the encryption setup request, and set up, in place of the UE, the second encrypted connection to the network server according to the encryption setup request; or
intercept a TCP setup request sent by the UE to the network server, where the TCP setup request includes an IP address of the UE and an IP address of the network server;
set up, in place of the network server, a TCP connection to the UE according to the IP address of the network server, and set up a TCP connection to the network server according to an IP address of the proxy node; and
intercept an encryption setup request sent by the UE to the network server by using the TCP connection, set up, in place of the network server, the first encrypted connection to the UE according to the encryption setup request, and set up the second encrypted connection to the network server according to the IP address of the proxy node.

In a second possible implementation, the connection setup module 710 is specifically configured to:
intercept a TCP setup request sent by the UE to a tunnel gateway, where the TCP setup request includes an IP address of the UE and an IP address of the tunnel gateway, and the tunnel gateway is located between the proxy node and the network server;
set up, in place of the tunnel gateway, a TCP connection to the UE according to the IP address of the tunnel gateway, set up, in place of the UE, a TCP connection to the tunnel gateway according to the IP address of the UE, and trigger the tunnel gateway to set up a TCP connection to the network server according to the IP address of the tunnel gateway;
intercept an encryption setup request sent by the UE to the tunnel gateway by using the TCP connection, where the encryption setup request includes the IP address of the UE and an IP address of the network server; and
set up, in place of the network server, the first encrypted connection to the UE according to the IP address of the network server, and forward the encryption setup request to the tunnel gateway by using the TCP connection, where the tunnel gateway is configured to forward the encryption setup request to the network server by using the TCP connection, and the encryption setup request is used to instruct the network server to set up the second encrypted connection to the proxy node that is in place of the UE.

In a third possible implementation, the connection setup module 710 is specifically configured to:
intercept a TCP setup request sent by a tunnel gateway to the network server, where the TCP setup request is sent after the tunnel gateway sets up a TCP connection to the UE, the TCP setup request includes an IP address of the tunnel gateway and an IP address of the network server, and the tunnel gateway is located between the UE and the proxy node;
set up, in place of the network server, a TCP connection to the tunnel gateway according to the IP address of the network server, and set up, in place of the tunnel gateway, a TCP connection to the network server according to the IP address of the tunnel gateway;
intercept an encryption setup request sent by the tunnel gateway to the network server by using the TCP connection, where the encryption setup request is sent by the UE to the tunnel gateway by using the TCP connection, and the encryption setup request includes an IP address of the UE and the IP address of the network server; and
set up, in place of the network server, the first encrypted connection to the UE according to the IP address of the network server, and forward the encryption setup request to the network server by using the TCP connection, where the encryption setup request is used to instruct the network server to set up the second encrypted connection to the proxy node that is in place of the UE.

In a fourth possible implementation, the key generation module 720 is specifically configured to:
send, to a key server, an obtaining request that carries a connection identifier of the TCP connection, where the obtaining request is used to instruct the key server to determine the UE according to the connection identifier, forward the obtaining request to the UE, receive the encryption context sent by the UE according to the connection identifier, and forward the encryption context to the proxy node; and receive the encryption context forwarded by the key server; or
send, to the UE, an obtaining request that carries a connection identifier of the TCP connection, where the obtaining request is used to instruct the UE to send the encryption context to a key server according to the connection identifier, and the encryption context is used to instruct the key server to forward the encryption context to the proxy node; and receive the encryption context forwarded by the key server; or
receive the encryption context forwarded by a key server, where the encryption context is forwarded to the proxy node after the key server receives the encryption context and a connection identifier of the TCP connection that are sent by the UE and determines, according to a correspondence, the proxy node corresponding to the connection identifier, and the correspondence is used to indicate a relationship between the connection identifier and the proxy node.

In summary, the service processing apparatus provided in this embodiment of the present invention sets up, in place of a network server, a first encrypted connection to UE, obtains, from the UE, an encryption context generated in the process of setting up the first encrypted connection, and generates a first key according to the encryption context. The service processing apparatus receives a ciphertext sent by the UE, decrypts the ciphertext by using the first key, and processes obtained service information. In this way, the service processing apparatus may obtain the first key that the UE and the network server agree upon, decrypt, by using the first key, the ciphertext sent by the UE to the network server, and process the service information. Therefore, a problem that a proxy node cannot provide service optimization for UE because the proxy node cannot decrypt a ciphertext is resolved, and an effect of expanding a usage scope of service optimization is achieved.

Referring to FIG. 8, FIG. 8 is a schematic structural diagram of a service processing apparatus according to an embodiment of the present invention. The service processing apparatus is applied to UE. The service processing apparatus may include:
a connection setup module 810, configured to set up, in a connection setup process between the UE and a network server, a first encrypted connection to a proxy node that is in place of the network server, where the proxy node is configured to set up a second encrypted connection to the network server;
a key providing module 820, configured to provide the proxy node with an encryption context that is generated in the process of setting up the first encrypted connection, where the encryption context is used to instruct the proxy node to generate a first key according to the encryption context; and generate, by the UE, a second key according to the encryption context, where the second key corresponds to the first key; and
a ciphertext sending module 830, configured to encrypt service information by using the second key generated by the key providing module 820, and send an obtained ciphertext to the proxy node, where the ciphertext is used to instruct the proxy node to decrypt the ciphertext by using the first key, process the obtained service information, and send the processed service information to the network server by using the second encrypted connection.

In summary, the service processing apparatus provided in this embodiment of the present invention sets up a first encrypted connection to a proxy node that is in place of a network server, and provides the proxy node with an encryption context that is generated in the process of setting up the first encrypted connection, where the encryption context is used to instruct the proxy node to generate a first key according to the encryption context. The service processing apparatus encrypts service information by using a second key, and sends an obtained ciphertext to the proxy node, where the ciphertext is used to instruct the proxy node to decrypt the ciphertext by using the first key, and process the obtained service information, Therefore, a problem that a proxy node cannot provide service optimization for UE because the proxy node cannot decrypt a ciphertext is resolved, and an effect of expanding a usage scope of service optimization is achieved.

Referring to FIG. 8, FIG. 8 is a schematic structural diagram of another service processing apparatus according to an embodiment of the present invention. The service processing apparatus is applied to UE. The service processing apparatus may include:
a connection setup module 810, configured to set up, in a connection setup process between the UE and a network server, a first encrypted connection to a proxy node that is in place of the network server, where the proxy node is configured to set up a second encrypted connection to the network server;
a key providing module 820, configured to provide the proxy node with an encryption context that is generated in the process of setting up the first encrypted connection, where the encryption context is used to instruct the proxy node to generate a first key according to the encryption context; and generate, by the UE, a second key according to the encryption context, where the second key corresponds to the first key; and
a ciphertext sending module 830, configured to encrypt service information by using the second key generated by the key providing module 820, and send an obtained ciphertext to the proxy node, where the ciphertext is used to instruct the proxy node to decrypt the ciphertext by using the first key, process the obtained service information, and send the processed service information to the network server by using the second encrypted connection.

In a first possible implementation, the connection setup module 810 is specifically configured to:
send a TCP setup request to the network server, where the TCP setup request includes an IP address of the UE and an IP address of the network server;
set up, according to the IP address of the network server that is obtained by the proxy node after the proxy node intercepts the TCP setup request, a TCP connection to the proxy node that is in place of the network server, where the proxy node is configured to set up, in place of the UE, a TCP connection to the network server according to the IP address of the UE; and
send an encryption setup request to the network server by using the TCP connection, and set up, according to the encryption setup request intercepted by the proxy node, the first encrypted connection to the proxy node that is in place of the network server, where the proxy node is configured to set up, in place of the UE, the second encrypted connection to the network server according to the encryption setup request; or
send a TCP setup request to the network server, where the TCP setup request includes an IP address of the UE and an IP address of the network server;
set up, according to the IP address of the network server that is obtained by the proxy node after the proxy node intercepts the TCP setup request, a TCP connection to the proxy node that is in place of the network server, where the proxy node is configured to set up a TCP connection to the network server according to an IP address of the proxy node; and
send an encryption setup request to the network server by using the TCP connection, and set up, according to the encryption setup request intercepted by the proxy node, the first encrypted connection to the proxy node that is in place of the network server, where the proxy node is configured to set up the second encrypted connection to the network server according to the IP address of the proxy node.

In a second possible implementation, the connection setup module 810 is specifically configured to:
send a TCP setup request to a tunnel gateway, where the TCP setup request includes an IP address of the UE and an IP address of the tunnel gateway, and the tunnel gateway is located between the proxy node and the network server;
set up, according to the IP address of the tunnel gateway that is obtained by the proxy node after the proxy node intercepts the TCP setup request, a TCP connection to the proxy node that is in place of the tunnel gateway, where the proxy node is configured to set up, in place of the UE, a TCP connection to the tunnel gateway according to the IP address of the UE, and trigger the tunnel gateway to set up a TCP connection to the network server according to the IP address of the tunnel gateway;
send an encryption setup request to the tunnel gateway by using the TCP connection, where the encryption setup request includes the IP address of the UE and an IP address of the network server; and
set up, according to the IP address of the network server that is obtained by the proxy node after the proxy node intercepts the encryption setup request, the first encrypted connection to the proxy node that is in place of the network server, where the proxy node is configured to forward the encryption setup request to the tunnel gateway by using the TCP connection, and the encryption setup request is used to instruct the tunnel gateway to forward the encryption setup request to the network server by using the TCP connection and instruct the network server to set up the second encrypted connection to the proxy node that is in place of the UE.

In a third possible implementation, the connection setup module 810 is specifically configured to:
set up a TCP connection to a tunnel gateway, where the tunnel gateway is configured to send a TCP setup request to the network server, the TCP setup request includes an IP address of the tunnel gateway and an IP address of the network server, the tunnel gateway is configured to set up, according to the IP address of the network server that is obtained by the proxy node after the proxy node intercepts the TCP setup request, a TCP connection to the proxy node that is in place of the network server, the proxy node is configured to set up, in place of the tunnel gateway, a TCP connection to the network server according to the IP address of the tunnel gateway, and the tunnel gateway is located between the UE and the proxy node;
send an encryption setup request to the tunnel gateway by using the TCP connection, where the encryption setup request is used to instruct the tunnel gateway to forward the encryption setup request to the network server, and the encryption setup request includes an IP address of the UE and the IP address of the network server; and
set up, according to the IP address of the network server that is obtained by the proxy node after the proxy node intercepts the encryption setup request, the first encrypted connection to the proxy node that is in place of the network server, where the proxy node is configured to forward the encryption setup request to the network server by using the TCP connection, and the encryption setup request is used to instruct the network server to set up the second encrypted connection to the proxy node that is in place of the UE.

In a fourth possible implementation, the key providing module 820 is specifically configured to:
receive an obtaining request that carries a connection identifier of the TCP connection and is forwarded by a key server, and send the encryption context to the key server according to the connection identifier, where the encryption context is used to instruct the key server to forward the encryption context to the proxy node, and the obtaining request is sent by the proxy node to the key server and is sent by the key server after the key server determines the UE according to the connection identifier; or
receive an obtaining request that carries a connection identifier of the TCP connection and is sent by the proxy node, and send the encryption context to a key server according to the connection identifier, where the encryption context is used to instruct the key server to forward the encryption context to the proxy node; or
send the encryption context and a connection identifier of the TCP connection to a key server, where the encryption context is forwarded to the proxy node after the key server determines, according to a correspondence, the proxy node corresponding to the connection identifier, and the correspondence is used to indicate a relationship between the connection identifier and the proxy node.

In summary, the service processing apparatus provided in this embodiment of the present invention sets up a first encrypted connection to a proxy node that is in place of a network server, and provides the proxy node with an encryption context that is generated in the process of setting up the first encrypted connection, where the encryption context is used to instruct the proxy node to generate a first key according to the encryption context. The service processing apparatus encrypts service information by using a second key, and sends an obtained ciphertext to the proxy node, where the ciphertext is used to instruct the proxy node to decrypt the ciphertext by using the first key, and process the obtained service information, Therefore, a problem that a proxy node cannot provide service optimization for UE because the proxy node cannot decrypt a ciphertext is resolved, and an effect of expanding a usage scope of service optimization is achieved.

Referring to FIG. 9, FIG. 9 is a schematic structural diagram of a service processing apparatus according to an embodiment of the present invention. The service processing apparatus may include a bus 901, and a processor 902, a memory 903, a transmitter 904, and a receiver 905 that are connected to the bus. The memory 903 is configured to store several instructions, and the processor 902 is configured to execute the instructions.

When the service processing apparatus is applied to a proxy node:
the processor 902 is configured to set up, in place of a network server in a connection setup process between UE and the network server, a first encrypted connection to the UE, and set up a second encrypted connection to the network server;
the receiver 905 is configured to obtain, from the UE, an encryption context generated in the process of setting up the first encrypted connection;
the processor 902 is further configured to generate a first key according to the encryption context received by the receiver 905;
the receiver 905 is further configured to receive a ciphertext sent by the UE;
the processor 902 is further configured to decrypt the ciphertext by using the first key, and process obtained service information; and
the transmitter 904 is configured to send the service information that has been processed by the processor 902 to the network server by using the second encrypted connection, where the ciphertext is obtained by the UE by encrypting the service information by using a second key, the first key corresponds to the second key, and the second key is generated by the UE according to the encryption context.

In a first possible implementation, the receiver 905 is further configured to intercept a TCP setup request sent by the UE to the network server, where the TCP setup request includes an IP address of the UE and an IP address of the network server;
the processor 902 is further configured to set up, in place of the network server, a TCP connection to the UE according to the IP address of the network server, and set up, in place of the UE, a TCP connection to the network server according to the IP address of the UE;
the receiver 905 is further configured to intercept an encryption setup request sent by the UE to the network server by using the TCP connection; and
the processor 902 is further configured to set up, in place of the network server, the first encrypted connection to the UE according to the encryption setup request, and set up, in place of the UE, the second encrypted connection to the network server according to the encryption setup request; or
the receiver 905 is further configured to intercept a TCP setup request sent by the UE to the network server, where the TCP setup request includes an IP address of the UE and an IP address of the network server;
the processor 902 is further configured to set up, in place of the network server, a TCP connection to the UE according to the IP address of the network server, and set up a TCP connection to the network server according to an IP address of the proxy node;
the receiver 905 is further configured to intercept an encryption setup request sent by the UE to the network server by using the TCP connection; and
the processor 902 is further configured to set up, in place of the network server, the first encrypted connection to the UE according to the encryption setup request, and set up the second encrypted connection to the network server according to the IP address of the proxy node.

In a second possible implementation, the receiver 905 is further configured to intercept a TCP setup request sent by the UE to a tunnel gateway, where the TCP setup request includes an IP address of the UE and an IP address of the tunnel gateway, and the tunnel gateway is located between the proxy node and the network server;
the processor 902 is further configured to set up, in place of the tunnel gateway, a TCP connection to the UE according to the IP address of the tunnel gateway, set up, in place of the UE, a TCP connection to the tunnel gateway according to the IP address of the UE, and trigger the tunnel gateway to set up a TCP connection to the network server according to the IP address of the tunnel gateway;
the receiver 905 is further configured to intercept an encryption setup request sent by the UE to the tunnel gateway by using the TCP connection, where the encryption setup request includes the IP address of the UE and an IP address of the network server;
the processor 902 is further configured to set up, in place of the network server, the first encrypted connection to the UE according to the IP address of the network server; and
the transmitter 904 is further configured to forward the encryption setup request to the tunnel gateway by using the TCP connection, where the tunnel gateway is configured to forward the encryption setup request to the network server by using the TCP connection, and the encryption setup request is used to instruct the network server to set up the second encrypted connection to the proxy node that is in place of the UE.

In a third possible implementation, the receiver 905 is further configured to intercept a TCP setup request sent by a tunnel gateway to the network server, where the TCP setup request is sent after the tunnel gateway sets up a TCP connection to the UE, the TCP setup request includes an IP address of the tunnel gateway and an IP address of the network server, and the tunnel gateway is located between the UE and the proxy node;
the processor 902 is further configured to set up, in place of the network server, a TCP connection to the tunnel gateway according to the IP address of the network server, and set up, in place of the tunnel gateway, a TCP connection to the network server according to the IP address of the tunnel gateway;
the receiver 905 is further configured to intercept an encryption setup request sent by the tunnel gateway to the network server by using the TCP connection, where the encryption setup request is sent by the UE to the tunnel gateway by using the TCP connection, and the encryption setup request includes an IP address of the UE and the IP address of the network server;
the processor 902 is further configured to set up, in place of the network server, the first encrypted connection to the UE according to the IP address of the network server; and
the transmitter 904 is further configured to forward the encryption setup request to the network server by using the TCP connection, where the encryption setup request is used to instruct the network server to set up the second encrypted connection to the proxy node that is in place of the UE.

In a fourth possible implementation, the transmitter 904 is further configured to send, to a key server, an obtaining request that carries a connection identifier of the TCP connection, where the obtaining request is used to instruct the key server to determine the UE according to the connection identifier, forward the obtaining request to the UE, receive the encryption context sent by the UE according to the connection identifier, and forward the encryption context to the proxy node; and the receiver 905 is further configured to receive the encryption context forwarded by the key server; or
the transmitter 904 is further configured to send, to the UE, an obtaining request that carries a connection identifier of the TCP connection, where the obtaining request is used to instruct the UE to send the encryption context to a key server according to the connection identifier, and the encryption context is used to instruct the key server to forward the encryption context to the proxy node; and the receiver 905 is further configured to receive the encryption context forwarded by the key server; or
the receiver 905 is further configured to receive the encryption context forwarded by a key server, where the encryption context is forwarded to the proxy node after the key server receives the encryption context and a connection identifier of the TCP connection that are sent by the UE and determines, according to a correspondence, the proxy node corresponding to the connection identifier, and the correspondence is used to indicate a relationship between the connection identifier and the proxy node.

When the service processing apparatus is applied to UE:
the processor 902 is configured to set up, in a connection setup process between the UE and a network server, a first encrypted connection to a proxy node that is in place of the network server, where the proxy node is configured to set up a second encrypted connection to the network server;
the transmitter 904 is configured to provide the proxy node with an encryption context that is generated in the process of setting up the first encrypted connection, where the encryption context is used to instruct the proxy node to generate a first key according to the encryption context; and the processor 902 is further configured to generate a second key according to the encryption context, where the second key corresponds to the first key;
the processor 902 is further configured to encrypt service information by using the second key; and
the transmitter 904 is further configured to send a ciphertext obtained by the processor 902 to the proxy node, where the ciphertext is used to instruct the proxy node to decrypt the ciphertext by using the first key, process the obtained service information, and send the processed service information to the network server by using the second encrypted connection.

In a first possible implementation, the transmitter 904 is further configured to send a TCP setup request to the network server, where the TCP setup request includes an IP address of the UE and an IP address of the network server;
the processor 902 is further configured to set up, according to the IP address of the network server that is obtained by the proxy node after the proxy node intercepts the TCP setup request, a TCP connection to the proxy node that is in place of the network server, where the proxy node is configured to set up, in place of the UE, a TCP connection to the network server according to the IP address of the UE;
the transmitter 904 is further configured to send an encryption setup request to the network server by using the TCP connection; and
the processor 902 is further configured to set up, according to the encryption setup request intercepted by the proxy node, the first encrypted connection to the proxy node that is in place of the network server, where the proxy node is configured to set up, in place of the UE, the second encrypted connection to the network server according to the encryption setup request; or
the transmitter 904 is further configured to send a TCP setup request to the network server, where the TCP setup request includes an IP address of the UE and an IP address of the network server;
the processor 902 is further configured to set up, according to the IP address of the network server that is obtained by the proxy node after the proxy node intercepts the TCP setup request, a TCP connection to the proxy node that is in place of the network server, where the proxy node is configured to set up a TCP connection to the network server according to an IP address of the proxy node;
the transmitter 904 is further configured to send an encryption setup request to the network server by using the TCP connection; and
the processor 902 is further configured to set up, according to the encryption setup request intercepted by the proxy node, the first encrypted connection to the proxy node that is in place of the network server, where the proxy node is configured to set up the second encrypted connection to the network server according to the IP address of the proxy node.

In a second possible implementation, the transmitter 904 is further configured to send a TCP setup request to a tunnel gateway, where the TCP setup request includes an IP address of the UE and an IP address of the tunnel gateway, and the tunnel gateway is located between the proxy node and the network server;
the processor 902 is further configured to set up, according to the IP address of the tunnel gateway that is obtained by the proxy node after the proxy node intercepts the TCP setup request, a TCP connection to the proxy node that is in place of the tunnel gateway, where the proxy node is configured to set up, in place of the UE, a TCP connection to the tunnel gateway according to the IP address of the UE, and trigger the tunnel gateway to set up a TCP connection to the network server according to the IP address of the tunnel gateway;
the transmitter 904 is further configured to send an encryption setup request to the tunnel gateway by using the TCP connection, where the encryption setup request includes the IP address of the UE and an IP address of the network server; and
the processor 902 is further configured to set up, according to the IP address of the network server that is obtained by the proxy node after the proxy node intercepts the encryption setup request, the first encrypted connection to the proxy node that is in place of the network server, where the proxy node is configured to forward the encryption setup request to the tunnel gateway by using the TCP connection, and the encryption setup request is used to instruct the tunnel gateway to forward the encryption setup request to the network server by using the TCP connection and instruct the network server to set up the second encrypted connection to the proxy node that is in place of the UE.

In a third possible implementation, the processor 902 is further configured to set up a TCP connection to a tunnel gateway, where the tunnel gateway is configured to send a TCP setup request to the network server, the TCP setup request includes an IP address of the tunnel gateway and an IP address of the network server, the tunnel gateway is configured to set up, according to the IP address of the network server that is obtained by the proxy node after the proxy node intercepts the TCP setup request, a TCP connection to the proxy node that is in place of the network server, the proxy node is configured to set up, in place of the tunnel gateway, a TCP connection to the network server according to the IP address of the tunnel gateway, and the tunnel gateway is located between the UE and the proxy node;
the transmitter 904 is further configured to send an encryption setup request to the tunnel gateway by using the TCP connection, where the encryption setup request is used to instruct the tunnel gateway to forward the encryption setup request to the network server, and the encryption setup request includes an IP address of the UE and the IP address of the network server; and
the processor 902 is further configured to set up, according to the IP address of the network server that is obtained by the proxy node after the proxy node intercepts the encryption setup request, the first encrypted connection to the proxy node that is in place of the network server, where the proxy node is configured to forward the encryption setup request to the network server by using the TCP connection, and the encryption setup request is used to instruct the network server to set up the second encrypted connection to the proxy node that is in place of the UE.

In a fourth possible implementation, the receiver 905 is configured to receive an obtaining request that carries a connection identifier of the TCP connection and is forwarded by a key server, and the transmitter 904 is further configured to send the encryption context to the key server according to the connection identifier, where the encryption context is used to instruct the key server to forward the encryption context to the proxy node, and the obtaining request is sent by the proxy node to the key server and is sent by the key server after the key server determines the UE according to the connection identifier; or
the receiver 905 is configured to receive an obtaining request that carries a connection identifier of the TCP connection and is sent by the proxy node, and the transmitter 904 is further configured to send the encryption context to a key server according to the connection identifier, where the encryption context is used to instruct the key server to forward the encryption context to the proxy node; or
the receiver 905 is configured to send the encryption context and a connection identifier of the TCP connection to a key server, where the encryption context is forwarded to the proxy node after the key server determines, according to a correspondence, the proxy node corresponding to the connection identifier, and the correspondence is used to indicate a relationship between the connection identifier and the proxy node.

In summary, the service processing apparatus provided in this embodiment of the present invention sets up, in place of a network server, a first encrypted connection to UE, obtains, from the UE, an encryption context generated in the process of setting up the first encrypted connection, and generates a first key according to the encryption context. The service processing apparatus receives a ciphertext sent by the UE, decrypts the ciphertext by using the first key, and processes obtained service information. In this way, the service processing apparatus may obtain the first key that the UE and the network server agree upon, decrypt, by using the first key, the ciphertext sent by the UE to the network server, and process the service information. Therefore, a problem that a proxy node cannot provide service optimization for UE because the proxy node cannot decrypt a ciphertext is resolved, and an effect of expanding a usage scope of service optimization is achieved.

It should be noted that, when the service processing apparatus provided by the foregoing embodiments performs service processing, division of the foregoing functional modules is used only as an example for description. In an actual application, the foregoing functions may be allocated to different functional modules and implemented according to a requirement, that is, an internal structure of the service processing apparatus is divided into different functional modules for implementing all or some of the functions described above. In addition, the embodiments of the service processing apparatus and the service processing method provided in the foregoing embodiments belong to a same concept. For a specific implementation process thereof, refer to the method embodiment. Details are not described herein.

The sequence numbers of the foregoing embodiments of the present invention are merely for illustrative purposes, and are not intended to indicate priorities of the embodiments.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description. For a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division may merely be logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A service processing method, wherein the method comprises:
setting up (101, 201), by user equipment, UE, in a connection setup process between the UE and a network server, a first encrypted connection to a proxy node that is in place of the network server, wherein the proxy node is configured to set up a second encrypted connection to the network server;
providing (102, 202), by the UE, the proxy node with an encryption context that is generated in the process of setting up the first encrypted connection, wherein the encryption context is used to instruct the proxy node to generate a first key according to the encryption context; and generating, by the UE, a second key according to the encryption context, wherein the second key corresponds to the first key so that information encrypted by using the second key can be decrypted by using the first key; wherein the first key and the second key are used for realizing the first encrypted connection; and
encrypting (103, 203), by the UE, service information by using the second key, and sending an obtained ciphertext to the proxy node, wherein the ciphertext is used to instruct the proxy node to decrypt the ciphertext by using the first key, to process the obtained service information, and to send the processed service information to the network server by using the second encrypted connection;
wherein the providing, by the UE, the proxy node with an encryption context that is generated in the process of setting up the first encrypted connection comprises:
receiving, by the UE, an obtaining request that carries a connection identifier of the TCP connection and is forwarded by a key server, and sending the encryption context to the key server according to the connection identifier, wherein the encryption context is used to instruct the key server to forward the encryption context to the proxy node, and the obtaining request is sent by the proxy node to the key server and is sent by the key server after the key server determines the UE according to the connection identifier; or
receiving, by the UE, an obtaining request that carries a connection identifier of the TCP connection and is sent by the proxy node, and sending the encryption context to a key server according to the connection identifier, wherein the encryption context is used to instruct the key server to forward the encryption context to the proxy node; or
sending, by the UE, the encryption context and a connection identifier of the TCP connection to a key server, wherein the encryption context is forwarded to the proxy node after the key server determines, according to a correspondence, the proxy node corresponding to the connection identifier, and the correspondence is used to indicate a relationship between the connection identifier and the proxy node
wherein the connection between the UE and the key server and the connection between the key server and the proxy node are respectively encrypted.

2. The method according to claim 1, wherein the setting up, by UE, in a connection setup process between the UE and a network server, a first encrypted connection to a proxy node that is in place of the network server, wherein the proxy node is configured to set up a second encrypted connection to the network server comprises:
sending, by the UE, a Transmission Control Protocol, TCP, setup request to the network server, wherein the TCP setup request comprises an Internet Protocol IP address of the UE and an IP address of the network server;
setting up, by the UE according to the IP address of the network server that is obtained by the proxy node after the proxy node intercepts the TCP setup request, a TCP connection to the proxy node that is in place of the network server, wherein the proxy node is configured to set up, in place of the UE, a TCP connection to the network server according to the IP address of the UE; and
sending, by the UE, an encryption setup request to the network server by using the TCP connection, and setting up, the first encrypted connection to the proxy node that is in place of the network server, wherein the proxy node is configured to set up, in place of the UE, the second encrypted connection to the network server according to the encryption setup request.

3. The method according to claim 1, wherein the setting up, by UE, in a connection setup process between the UE and a network server, a first encrypted connection to a proxy node that is in place of the network server, wherein the proxy node is configured to set up a second encrypted connection to the network server comprises:
sending, by the UE, a TCP setup request to the network server, wherein the TCP setup request comprises an IP address of the UE and an IP address of the network server;
setting up, by the UE according to the IP address of the network server that is obtained by the proxy node after the proxy node intercepts the TCP setup request, a TCP connection to the proxy node that is in place of the network server, wherein the proxy node is configured to set up a TCP connection to the network server according to an IP address of the proxy node; and
sending, by the UE, an encryption setup request to the network server by using the TCP connection, and setting up, according to the encryption setup request intercepted by the proxy node, the first encrypted connection to the proxy node that is in place of the network server, wherein the proxy node is configured to set up the second encrypted connection to the network server according to the IP address of the proxy node.

4. The method according to claim 1, wherein the setting up, by UE, in a connection setup process between the UE and a network server, a first encrypted connection to a proxy node that is in place of the network server, wherein the proxy node is configured to set up a second encrypted connection to the network server comprises:
sending, by the UE, a TCP setup request to a tunnel gateway, wherein the TCP setup request comprises an IP address of the UE and an IP address of the tunnel gateway, and the tunnel gateway is located between the proxy node and the network server;
setting up, by the UE according to the IP address of the tunnel gateway that is obtained by the proxy node after the proxy node intercepts the TCP setup request, a TCP connection to the proxy node that is in place of the tunnel gateway, wherein the proxy node is configured to set up, in place of the UE, a TCP connection to the tunnel gateway according to the IP address of the UE, and trigger the tunnel gateway to set up a TCP connection to the network server according to the IP address of the tunnel gateway;
sending, by the UE, an encryption setup request to the tunnel gateway by using the TCP connection, wherein the encryption setup request comprises the IP address of the UE and an IP address of the network server; and
setting up, by the UE according to the IP address of the network server, the first encrypted connection to the proxy node that is in place of the network server, wherein the proxy node is configured to forward the encryption setup request to the tunnel gateway by using the TCP connection, and the encryption setup request is used to instruct the tunnel gateway to forward the encryption setup request to the network server by using the TCP connection and instruct the network server to set up the second encrypted connection to the proxy node that is in place of the UE.

5. The method according to claim 1, wherein the setting up, by UE, in a connection setup process between the UE and a network server, a first encrypted connection to a proxy node that is in place of the network server, wherein the proxy node is configured to set up a second encrypted connection to the network server comprises:
setting up, by the UE, a TCP connection to a tunnel gateway, wherein the tunnel gateway is configured to send a TCP setup request to the network server, the TCP setup request comprises an IP address of the tunnel gateway and an IP address of the network server, the tunnel gateway is configured to set up, according to the IP address of the network server that is obtained by the proxy node after the proxy node intercepts the TCP setup request, a TCP connection to the proxy node that is in place of the network server, the proxy node is configured to set up, in place of the tunnel gateway, a TCP connection to the network server according to the IP address of the tunnel gateway, and the tunnel gateway is located between the UE and the proxy node;
sending, by the UE, an encryption setup request to the tunnel gateway by using the TCP connection, wherein the encryption setup request is used to instruct the tunnel gateway to forward the encryption setup request to the network server, and the encryption setup request comprises an IP address of the UE and the IP address of the network server; and
setting up, by the UE according to the IP address of the network server that is obtained by the proxy node after the proxy node intercepts the encryption setup request, the first encrypted connection to the proxy node that is in place of the network server, wherein the proxy node is configured to forward the encryption setup request to the network server by using the TCP connection, and the encryption setup request is used to instruct the network server to set up the second encrypted connection to the proxy node that is in place of the UE.

6. A system comprising a network server, a proxy node, a key server and a service processing apparatus, applied to user equipment, UE, wherein the service processing apparatus comprises:
a connection setup module (810), configured to set up, in a connection setup process between the UE and the network server, a first encrypted connection to the proxy node that is in place of the network server, wherein the proxy node is configured to set up a second encrypted connection to the network server;
a key providing module (820), configured to provide the proxy node with an encryption context that is generated in the process of setting up the first encrypted connection, wherein the encryption context is used to instruct the proxy node to generate a first key according to the encryption context; and generate a second key according to the encryption context, wherein the second key corresponds to the first key so that information encrypted by using the second key can be decrypted by using the first key; wherein the first key and the second key are used for realizing the first encrypted connection; and
a ciphertext sending module (830), configured to encrypt service information by using the second key generated by the key providing module, and send an obtained ciphertext to the proxy node, wherein the ciphertext is used to instruct the proxy node to decrypt the ciphertext by using the first key, to process the obtained service information, and to send the processed service information to the network server by using the second encrypted connection;
wherein the key providing module is specifically configured to:
receive an obtaining request that carries a connection identifier of the TCP connection and is forwarded by the key server, and send the encryption context to the key server according to the connection identifier, wherein the encryption context is used to instruct the key server to forward the encryption context to the proxy node, and the obtaining request is sent by the proxy node to the key server and is sent by the key server after the key server determines the UE according to the connection identifier; or
receive an obtaining request that carries a connection identifier of the TCP connection and is sent by the proxy node, and send the encryption context to a key server according to the connection identifier, wherein the encryption context is used to instruct the key server to forward the encryption context to the proxy node; or
send the encryption context and a connection identifier of the TCP connection to the key server, wherein the encryption context is forwarded to the proxy node after the key server determines, according to a correspondence, the proxy node corresponding to the connection identifier, and the correspondence is used to indicate a relationship between the connection identifier and the proxy node wherein the connection between the UE and the key server and the connection between the key server and the proxy node are respectively encrypted.

7. The system according to claim 6, wherein the connection setup module is specifically configured to:
send a Transmission Control Protocol, TCP, setup request to the network server, wherein the TCP setup request comprises an Internet Protocol IP address of the UE and an IP address of the network server;
set up, according to the IP address of the network server that is obtained by the proxy node after the proxy node intercepts the TCP setup request, a TCP connection to the proxy node that is in place of the network server, wherein the proxy node is configured to set up, in place of the UE, a TCP connection to the network server according to the IP address of the UE; and
send an encryption setup request to the network server by using the TCP connection, and set up, according to the encryption setup request intercepted by the proxy node, the first encrypted connection to the proxy node that is in place of the network server, wherein the proxy node is configured to set up, in place of the UE, the second encrypted connection to the network server according to the encryption setup request.

8. The system according to claim 6, wherein the connection setup module is specifically configured to:
send a TCP setup request to the network server, wherein the TCP setup request comprises an IP address of the UE and an IP address of the network server;
set up, according to the IP address of the network server that is obtained by the proxy node after the proxy node intercepts the TCP setup request, a TCP connection to the proxy node that is in place of the network server, wherein the proxy node is configured to set up a TCP connection to the network server according to an IP address of the proxy node; and
send an encryption setup request to the network server by using the TCP connection, and set up, according to the encryption setup request intercepted by the proxy node, the first encrypted connection to the proxy node that is in place of the network server, wherein the proxy node is configured to set up the second encrypted connection to the network server according to the IP address of the proxy node.

9. The system according to claim 6, wherein the connection setup module is specifically configured to:
send a TCP setup request to a tunnel gateway, wherein the TCP setup request comprises an IP address of the UE and an IP address of the tunnel gateway, and the tunnel gateway is located between the proxy node and the network server;
set up, according to the IP address of the tunnel gateway that is obtained by the proxy node after the proxy node intercepts the TCP setup request, a TCP connection to the proxy node that is in place of the tunnel gateway, wherein the proxy node is configured to set up, in place of the UE, a TCP connection to the tunnel gateway according to the IP address of the UE, and trigger the tunnel gateway to set up a TCP connection to the network server according to the IP address of the tunnel gateway;
send an encryption setup request to the tunnel gateway by using the TCP connection, wherein the encryption setup request comprises the IP address of the UE and an IP address of the network server; and
set up, according to the IP address of the network server that is obtained by the proxy node after the proxy node intercepts the encryption setup request, the first encrypted connection to the proxy node that is in place of the network server, wherein the proxy node is configured to forward the encryption setup request to the tunnel gateway by using the TCP connection, and the encryption setup request is used to instruct the tunnel gateway to forward the encryption setup request to the network server by using the TCP connection and instruct the network server to set up the second encrypted connection to the proxy node that is in place of the UE.

10. The system according to claim 6, wherein the connection setup module is specifically configured to:
set up a TCP connection to a tunnel gateway, wherein the tunnel gateway is configured to send a TCP setup request to the network server, the TCP setup request comprises an IP address of the tunnel gateway and an IP address of the network server, the tunnel gateway is configured to set up, according to the IP address of the network server that is obtained by the proxy node after the proxy node intercepts the TCP setup request, a TCP connection to the proxy node that is in place of the network server, the proxy node is configured to set up, in place of the tunnel gateway, a TCP connection to the network server according to the IP address of the tunnel gateway, and the tunnel gateway is located between the UE and the proxy node;
send an encryption setup request to the tunnel gateway by using the TCP connection, wherein the encryption setup request is used to instruct the tunnel gateway to forward the encryption setup request to the network server, and the encryption setup request comprises an IP address of the UE and the IP address of the network server; and
set up, according to the IP address of the network server that is obtained by the proxy node after the proxy node intercepts the encryption setup request, the first encrypted connection to the proxy node that is in place of the network server, wherein the proxy node is configured to forward the encryption setup request to the network server by using the TCP connection, and the encryption setup request is used to instruct the network server to set up the second encrypted connection to the proxy node that is in place of the UE.

11. A computer readable storage medium storing a program to be executed by a processor, **characterized in that** the program comprises instructions for carrying out the method in any one of claims 1 to 5.

## Patentansprüche

1. Dienstverarbeitungsverfahren, das Verfahren Folgendes umfassend:
Aufbauen (101, 201), durch ein Benutzergerät, UE, in einem Verbindungsaufbauprozess zwischen dem UE und einem Netzwerkserver, einer ersten verschlüsselten Verbindung zu einem Proxy-Knoten, der sich anstelle des Netzwerkservers befindet, wobei der Proxy-Knoten dafür konfiguriert ist, eine zweite verschlüsselte Verbindung zum Netzwerkserver einzurichten;
Versorgen (102, 202) des Proxy-Knotens durch das UE mit einem Verschlüsselungskontext, der beim Prozess des Aufbaus der ersten verschlüsselten Verbindung erzeugt wird, wobei der Verschlüsselungskontext verwendet wird, um den Proxy-Knoten anzuweisen, einen ersten Schlüssel gemäß dem Verschlüsselungskontext zu erzeugen; und
Erzeugen eines zweiten Schlüssels durch das UE entsprechend dem Verschlüsselungskontext, wobei der zweite Schlüssel dem ersten Schlüssel entspricht, sodass Informationen, die unter Verwendung des zweiten Schlüssels verschlüsselt wurden, unter Verwendung des ersten Schlüssels entschlüsselt werden können;
wobei der erste Schlüssel und der zweite Schlüssel zur Realisierung der ersten verschlüsselten Verbindung verwendet werden; und
Verschlüsseln (103, 203) von Dienstinformationen durch das UE mit Hilfe des zweiten Schlüssels und Senden eines erhaltenen Geheimtextes an den Proxy-Knoten, wobei der Geheimtext verwendet wird, um den Proxy-Knoten anzuweisen, den Geheimtext mit Hilfe des ersten Schlüssels zu entschlüsseln, die erhaltenen Dienstinformationen zu verarbeiten und die verarbeiteten Dienstinformationen unter Verwendung der zweiten verschlüsselten Verbindung an den Netzwerkserver zu senden;
wobei das Bereitstellen, durch das UE, des Proxy-Knotens mit einem Verschlüsselungskontext, der im Prozess des Aufbaus der ersten verschlüsselten Verbindung erzeugt wird, Folgendes umfasst:
Empfangen, durch das UE, einer Abrufanforderung, die eine Verbindungskennung der TCP-Verbindung enthält und durch einen Schlüsselserver weitergeleitet wird, und Senden des Verschlüsselungskontextes an den Schlüsselserver gemäß der Verbindungskennung, wobei der Verschlüsselungskontext verwendet wird, um den Schlüsselserver anzuweisen, den Verschlüsselungskontext an den Proxy-Knoten weiterzuleiten, und wobei die Abrufanforderung durch den Proxy-Knoten an den Schlüsselserver und durch den Schlüsselserver gesendet wird, nachdem der Schlüsselserver das UE gemäß der Verbindungskennung bestimmt; oder
Empfangen, durch das UE, einer Abrufanforderung, die eine Verbindungskennung der TCP-Verbindung enthält und durch den Proxy-Knoten gesendet wird, und Senden des Verschlüsselungskontextes an einen Schlüsselserver entsprechend der Verbindungskennung, wobei der Verschlüsselungskontext verwendet wird, um den Schlüsselserver anzuweisen, den Verschlüsselungskontext an den Proxy-Knoten weiterzuleiten; oder
Senden, durch das UE, des Verschlüsselungskontextes und einer Verbindungskennung der TCP-Verbindung an einen Schlüsselserver, wobei der Verschlüsselungskontext an den Proxy-Knoten weitergeleitet wird, nachdem der Schlüsselserver gemäß einer Korrespondenz den Proxy-Knoten bestimmt, der der Verbindungskennung entspricht, und wobei die Korrespondenz verwendet wird, um eine Beziehung zwischen der Verbindungskennung und dem Proxy-Knoten anzuzeigen, wobei die Verbindung zwischen dem UE und dem Schlüsselserver und die Verbindung zwischen dem Schlüsselserver und dem Proxy-Knoten jeweils verschlüsselt sind.

2. Verfahren nach Anspruch 1, wobei der Aufbau, durch das UE, in einem Verbindungsaufbauprozess zwischen dem UE und einem Netzwerkserver, einer ersten verschlüsselten Verbindung zu einem Proxy-Knoten, der sich anstelle des Netzwerkservers befindet, wobei der Proxy-Knoten dafür konfiguriert ist, eine zweite verschlüsselte Verbindung zum Netzwerkserver aufzubauen, Folgendes umfasst:
Senden, durch das UE, einer TCP-Aufbauanforderung (Übertragungssteuerungsprotokoll, TCP) an den Netzwerkserver, wobei die TCP-Aufbauanforderung eine Internetprotokoll-IP-Adresse des UE und eine IP-Adresse des Netzwerkservers umfasst;
Aufbauen, durch das UE gemäß der lP-Adresse des Netzwerkservers, die durch den Proxy-Knoten erhalten wird, nachdem der Proxy-Knoten die TCP-Aufbauanforderung abgefangen hat, einer TCP-Verbindung zum Proxy-Knoten, der sich anstelle des Netzwerkservers befindet, wobei der Proxy-Knoten dafür konfiguriert ist, an der Stelle des UE eine TCP-Verbindung zum Netzwerkserver gemäß der lP-Adresse des UE aufzubauen; und
Senden, durch das UE, einer Verschlüsselungseinrichtungs-Anforderung an den Netzwerkserver unter Verwendung der TCP-Verbindung und Aufbauen der ersten verschlüsselten Verbindung zum Proxy-Knoten, der sich anstelle des Netzwerkservers befindet, wobei der Proxy-Knoten dafür konfiguriert ist, anstelle des UE die zweite verschlüsselte Verbindung zum Netzwerkserver gemäß der Verschlüsselungseinrichtungs-Anforderung aufzubauen.

3. Verfahren nach Anspruch 1, wobei das Aufbauen, durch UE, in einem Verbindungsaufbauprozess zwischen dem UE und einem Netzwerkserver, einer ersten verschlüsselten Verbindung zu einem Proxy-Knoten, der sich anstelle des Netzwerkservers befindet, wobei der Proxy-Knoten dafür konfiguriert ist, eine zweite verschlüsselte Verbindung zum Netzwerkserver aufzubauen, Folgendes umfassen:
Senden, durch das UE, einer TCP-Aufbauanforderung an den Netzwerkserver, wobei die TCP-Aufbauanforderung eine IP-Adresse des UE und eine IP-Adresse des Netzwerkservers umfasst;
Aufbauen, durch das UE gemäß der IP-Adresse des Netzwerkservers, die durch den Proxy-Knoten erhalten wird, nachdem der Proxy-Knoten die TCP-Aufbauanforderung abgefangen hat, einer TCP-Verbindung zum Proxy-Knoten, der sich anstelle des Netzwerkservers befindet, wobei der Proxy-Knoten dafür konfiguriert ist, eine TCP-Verbindung zum Netzwerkserver gemäß einer IP-Adresse des Proxy-Knotens aufzubauen; und
Senden, durch das UE, einer Verschlüsselungseinrichtungs-Anforderung an den Netzwerkserver unter Verwendung der TCP-Verbindung und Aufbauen, gemäß der durch den Proxy-Knoten abgefangenen Verschlüsselungseinrichtungs-Anforderung, der ersten verschlüsselten Verbindung zum Proxy-Knoten, der sich anstelle des Netzwerkservers befindet, wobei der Proxy-Knoten dafür konfiguriert ist, die zweite verschlüsselte Verbindung zum Netzwerkserver gemäß der IP-Adresse des Proxy-Knotens aufzubauen.

4. Verfahren nach Anspruch 1, wobei das Aufbauen, durch das UE, in einem Verbindungsaufbauprozess zwischen dem UE und einem Netzwerkserver, einer ersten verschlüsselten Verbindung zu einem Proxy-Knoten, der sich anstelle des Netzwerkservers befindet, wobei der Proxy-Knoten dafür konfiguriert ist, eine zweite verschlüsselte Verbindung zum Netzwerkserver aufzubauen, Folgendes umfassend:
Senden, durch das UE, einer TCP-Aufbauanforderung an ein Tunnel-Gateway, wobei die TCP-Aufbauanforderung eine lP-Adresse des UE und eine IP-Adresse des Tunnel-Gateways umfasst, und wobei sich das Tunnel-Gateway zwischen dem Proxy-Knoten und dem Netzwerkserver befindet;
Aufbauen, durch das UE gemäß der lP-Adresse des Tunnel-Gateways, die durch den Proxy-Knoten erhalten wird, nachdem der Proxy-Knoten die TCP-Aufbauanforderung abgefangen hat, einer TCP-Verbindung zum Proxy-Knoten, der sich anstelle des Tunnel-Gateways befindet, wobei der Proxy-Knoten dafür konfiguriert ist, anstelle des UE eine TCP-Verbindung zum Tunnel-Gateway entsprechend der lP-Adresse des UE aufzubauen und das Tunnel-Gateway zu veranlassen, eine TCP-Verbindung zum Netzwerk-Server entsprechend der IP-Adresse des Tunnel-Gateways aufzubauen;
Senden, durch das UE, einer Verschlüsselungseinrichtungs-Anforderung an das Tunnel-Gateway unter Verwendung der TCP-Verbindung, wobei die Verschlüsselungseinrichtungs-Anforderung die lP-Adresse des UE und eine IP-Adresse des Netzwerkservers umfasst; und
Aufbauen, durch das UE gemäß der lP-Adresse des Netzwerkservers, der ersten verschlüsselten Verbindung zum Proxy-Knoten, der sich anstelle des Netzwerkservers befindet, wobei der Proxy-Knoten dafür konfiguriert ist, die Verschlüsselungseinrichtungs-Anforderung an das Tunnel-Gateway unter Verwendung der TCP-Verbindung weiterzuleiten, und wobei die Verschlüsselungseinrichtungs-Anforderung verwendet wird, um das Tunnel-Gateway anzuweisen, die Verschlüsselungseinrichtungs-Anforderung an den Netzwerkserver unter Verwendung der TCP-Verbindung weiterzuleiten und den Netzwerkserver anzuweisen, die zweite verschlüsselte Verbindung zum Proxy-Knoten, der sich anstelle des UE befindet, aufzubauen.

5. Verfahren nach Anspruch 1, wobei das Aufbauen, durch das UE, in einem Verbindungsaufbauprozess zwischen dem UE und einem Netzwerkserver, einer ersten verschlüsselten Verbindung zu einem Proxy-Knoten, der sich anstelle des Netzwerkservers befindet, wobei der Proxy-Knoten dafür konfiguriert ist, eine zweite verschlüsselte Verbindung zum Netzwerkserver aufzubauen, die Folgendes umfasst:
Aufbauen, durch das UE, einer TCP-Verbindung zu einem Tunnel-Gateway, wobei das Tunnel-Gateway dafür konfiguriert ist, eine TCP-Aufbauanforderung an den Netzwerkserver zu senden, wobei die TCP-Aufbauanforderung eine IP-Adresse des Tunnel-Gateways und eine lP-Adresse des Netzwerkservers umfasst, wobei das Tunnel-Gateway dafür konfiguriert ist, entsprechend der IP-Adresse des Netzwerkservers, die vom Proxy-Knoten erhalten wird, nachdem der Proxy-Knoten die TCP-Aufbauanforderung abgefangen hat, eine TCP-Verbindung zum Proxy-Knoten aufzubauen, der sich anstelle des Netzwerkservers befindet, wobei der Proxy-Knoten dafür konfiguriert ist, anstelle des Tunnel-Gateways eine TCP-Verbindung zum Netzwerkserver entsprechend der lP-Adresse des Tunnel-Gateways aufzubauen, und wobei sich das Tunnel-Gateway zwischen dem UE und dem Proxy-Knoten befindet;
Senden, durch das UE, einer Verschlüsselungseinrichtungs-Anforderung an das Tunnel-Gateway unter Verwendung der TCP-Verbindung, wobei die Verschlüsselungseinrichtungs-Anforderung verwendet wird, um das Tunnel-Gateway anzuweisen, die Verschlüsselungseinrichtungs-Anforderung an den Netzwerkserver weiterzuleiten, und wobei die Verschlüsselungseinrichtungs-Anforderung eine lP-Adresse des UE und die lP-Adresse des Netzwerkservers umfasst; und
Aufbauen, durch das UE gemäß der lP-Adresse des Netzwerkservers, die durch den Proxy-Knoten erhalten wird, nachdem der Proxy-Knoten die Verschlüsselungseinrichtungs-Anforderung abfängt, der ersten verschlüsselten Verbindung zum Proxy-Knoten, der sich anstelle des Netzwerkservers befindet, wobei der Proxy-Knoten dafür konfiguriert ist, die Verschlüsselungseinrichtungs-Anforderung an den Netzwerkserver unter Verwendung der TCP-Verbindung weiterzuleiten, und wobei die Verschlüsselungseinrichtungs-Anforderung verwendet wird, um den Netzwerkserver anzuweisen, die zweite verschlüsselte Verbindung zum Proxy-Knoten, der sich anstelle des UE befindet, aufzubauen.

6. System, umfassend einen Netzwerkserver, einen Proxy-Knoten, einen Schlüsselserver und eine Dienstverarbeitungsvorrichtung, angewendet auf Benutzergeräte, UE, wobei die Dienstverarbeitungsvorrichtung Folgendes umfasst:
ein Verbindungsaufbaumodul (810), das dafür konfiguriert ist, in einem Verbindungsaufbauprozess zwischen dem UE und dem Netzwerkserver eine erste verschlüsselte Verbindung zum Proxy-Knoten aufzubauen, der sich an Stelle des Netzwerkservers befindet, wobei der Proxy-Knoten dafür konfiguriert ist, eine zweite verschlüsselte Verbindung zum Netzwerkserver aufzubauen;
ein Schlüsselbereitstellungsmodul (820), das dafür konfiguriert ist, den Proxy-Knoten mit einem Verschlüsselungskontext zu versorgen, der in dem Prozess des Aufbaus der ersten verschlüsselten Verbindung erzeugt wird, wobei der Verschlüsselungskontext verwendet wird, um den Proxy-Knoten anzuweisen, einen ersten Schlüssel gemäß dem Verschlüsselungskontext zu erzeugen; und
Erzeugen eines zweiten Schlüssels entsprechend dem Verschlüsselungskontext, wobei der zweite Schlüssel dem ersten Schlüssel entspricht, sodass Informationen, die mit Hilfe des zweiten Schlüssels verschlüsselt wurden, mit Hilfe des ersten Schlüssels entschlüsselt werden können;
wobei der erste Schlüssel und der zweite Schlüssel zur Realisierung der ersten verschlüsselten Verbindung verwendet werden; und
wobei ein Geheimtext-Sendemodul (830) dafür konfiguriert ist, Dienstinformationen mit Hilfe des zweiten Schlüssels, der vom Schlüsselbereitstellungsmodul erzeugt wird, zu verschlüsseln und einen erhaltenen Geheimtext an den Proxy-Knoten zu senden, wobei der Geheimtext verwendet wird, um den Proxy-Knoten anzuweisen, den Geheimtext unter Verwendung des ersten Schlüssels zu entschlüsseln, die erhaltenen Dienstinformationen zu verarbeiten und die verarbeiteten Dienstinformationen unter Verwendung der zweiten verschlüsselten Verbindung an den Netzwerkserver zu senden;
wobei das Schlüsselbereitstellungsmodul speziell für folgende Zwecke konfiguriert ist:
Empfangen einer Abrufanforderung, die eine Verbindungskennung der TCP-Verbindung enthält und vom Schlüsselserver weitergeleitet wird, und Senden des Verschlüsselungskontextes an den Schlüsselserver gemäß der Verbindungskennung, wobei der Verschlüsselungskontext verwendet wird, um den Schlüsselserver anzuweisen, den Verschlüsselungskontext an den Proxy-Knoten weiterzuleiten, und wobei die Abrufanforderung vom Proxy-Knoten an den Schlüsselserver gesendet wird und vom Schlüsselserver gesendet wird, nachdem der Schlüsselserver das UE gemäß der Verbindungskennung bestimmt; oder
Empfangen einer Abrufanforderung, die eine Verbindungskennung der TCP-Verbindung enthält und vom Proxy-Knoten gesendet wird, und Senden des Verschlüsselungskontextes an einen Schlüsselserver entsprechend der Verbindungskennung, wobei der Verschlüsselungskontext verwendet wird, um den Schlüsselserver anzuweisen, den Verschlüsselungskontext an den Proxy-Knoten weiterzuleiten; oder
Senden des Verschlüsselungskontextes und einer Verbindungskennung der TCP-Verbindung an den Schlüsselserver, wobei der Verschlüsselungskontext an den Proxy-Knoten weitergeleitet wird, nachdem der Schlüsselserver gemäß einer Korrespondenz den Proxy-Knoten bestimmt, der der Verbindungskennung entspricht, und wobei die Korrespondenz verwendet wird, um eine Beziehung zwischen der Verbindungskennung und dem Proxy-Knoten anzuzeigen, wobei die Verbindung zwischen dem UE und dem Schlüsselserver und die Verbindung zwischen dem Schlüsselserver und dem Proxy-Knoten jeweils verschlüsselt sind.

7. System nach Anspruch 6, wobei das Verbindungsaufbaumodul speziell für folgende Zwecke konfiguriert ist:
Senden einer TCP-Aufbauanforderung (Übertragungssteuerungsprotokoll, TCP) an den Netzwerkserver, wobei die TCP-Aufbauanforderung eine Internetprotokoll-IP-Adresse des UE und eine lP-Adresse des Netzwerkservers umfasst;
Aufbauen, gemäß der lP-Adresse des Netzwerkservers, die durch den Proxy-Knoten erhalten wird, nachdem der Proxy-Knoten die TCP-Aufbauanforderung abgefangen hat, einer TCP-Verbindung zum Proxy-Knoten, der sich anstelle des Netzwerkservers befindet, wobei der Proxy-Knoten dafür konfiguriert ist, an der Stelle des UE eine TCP-Verbindung zum Netzwerkserver gemäß der IP-Adresse des UE aufzubauen; und
Senden einer Verschlüsselungseinrichtungs-Anforderung an den Netzwerkserver unter Verwendung der TCP-Verbindung und Aufbauen, gemäß der Verschlüsselungseinrichtungs-Anforderung, die durch den Proxy-Knoten abgefangen wird, der ersten verschlüsselten Verbindung zum Proxy-Knoten, der sich anstelle des Netzwerkservers befindet, wobei der Proxy-Knoten dafür konfiguriert ist, anstelle des UE die zweite verschlüsselte Verbindung zum Netzwerkserver gemäß der Verschlüsselungseinrichtungs-Anforderung aufzubauen.

8. System nach Anspruch 6, wobei das Verbindungsaufbaumodul speziell für folgende Zwecke konfiguriert ist:
Senden einer TCP-Aufbauanforderung an den Netzwerkserver, wobei die TCP-Aufbauanforderung eine lP-Adresse des UE und eine lP-Adresse des Netzwerkservers umfasst;
Aufbauen, gemäß der lP-Adresse des Netzwerkservers, die durch den Proxy-Knoten erhalten wird, nachdem der Proxy-Knoten die TCP-Aufbauanforderung abgefangen hat, einer TCP-Verbindung zum Proxy-Knoten, der sich anstelle des Netzwerkservers befindet, wobei der Proxy-Knoten dafür konfiguriert ist, eine TCP-Verbindung zum Netzwerkserver gemäß einer lP-Adresse des Proxy-Knotens aufzubauen; und
Senden einer Verschlüsselungseinrichtungs-Anforderung an den Netzwerkserver unter Verwendung der TCP-Verbindung und Aufbauen, gemäß der durch den Proxy-Knoten abgefangenen Verschlüsselungseinrichtungs-Anforderung, der ersten verschlüsselten Verbindung zum Proxy-Knoten, der sich anstelle des Netzwerkservers befindet, wobei der Proxy-Knoten dafür konfiguriert ist, die zweite verschlüsselte Verbindung zum Netzwerkserver gemäß der IP-Adresse des Proxy-Knotens aufzubauen.

9. System nach Anspruch 6, wobei das Verbindungsaufbaumodul speziell für folgende Zwecke konfiguriert ist:
Senden einer TCP-Aufbauanforderung an ein Tunnel-Gateway, wobei die TCP-Aufbauanforderung eine IP-Adresse des UE und eine IP-Adresse des Tunnel-Gateways umfasst, und wobei sich das Tunnel-Gateway zwischen dem Proxy-Knoten und dem Netzwerkserver befindet;
Aufbauen, gemäß der IP-Adresse des Tunnel-Gateways, die durch den Proxy-Knoten erhalten wird, nachdem der Proxy-Knoten die TCP-Aufbauanforderung abgefangen hat, einer TCP-Verbindung zum Proxy-Knoten, der sich anstelle des Tunnel-Gateways befindet, wobei der Proxy-Knoten dafür konfiguriert ist, anstelle des UE eine TCP-Verbindung zum Tunnel-Gateway entsprechend der lP-Adresse des UE aufzubauen und das Tunnel-Gateway veranlasst, eine TCP-Verbindung zum Netzwerk-Server entsprechend der IP-Adresse des Tunnel-Gateways aufzubauen;
Senden einer Verschlüsselungseinrichtungs-Anforderung an das Tunnel-Gateway unter Verwendung der TCP-Verbindung, wobei die Verschlüsselungseinrichtungs-Anforderung die IP-Adresse des UE und eine IP-Adresse des Netzwerkservers umfasst; und
Aufbauen, gemäß der IP-Adresse des Netzwerkservers, die durch den Proxy-Knoten erhalten wird, nachdem der Proxy-Knoten die Verschlüsselungseinrichtungs-Anforderung abgefangen hat, der ersten verschlüsselten Verbindung zum Proxy-Knoten, der sich anstelle des Netzwerkservers befindet, wobei der Proxy-Knoten dafür konfiguriert ist, die Verschlüsselungseinrichtungs-Anforderung unter Verwendung der TCP-Verbindung an das Tunnel-Gateway weiterzuleiten, und wobei die Verschlüsselungseinrichtungs-Anforderung verwendet wird, um das Tunnel-Gateway anzuweisen, die Verschlüsselungseinrichtungs-Anforderung unter Verwendung der TCP-Verbindung an den Netzwerkserver weiterzuleiten und den Netzwerkserver anzuweisen, die zweite verschlüsselte Verbindung zum Proxy-Knoten, der sich anstelle des UE befindet, aufzubauen.

10. System nach Anspruch 6, wobei das Verbindungsaufbaumodul speziell für folgende Zwecke konfiguriert ist:
Aufbauen einer TCP-Verbindung zu einem Tunnel-Gateway, wobei das Tunnel-Gateway dafür konfiguriert ist, eine TCP-Aufbauanforderung an den Netzwerkserver zu senden, wobei die TCP-Aufbauanforderung eine IP-Adresse des Tunnel-Gateways und eine IP-Adresse des Netzwerkservers umfasst, wobei das Tunnel-Gateway dafür konfiguriert ist, entsprechend der lP-Adresse des Netzwerkservers, die vom Proxy-Knoten erhalten wird, nachdem der Proxy-Knoten die TCP-Aufbauanforderung abgefangen hat, eine TCP-Verbindung zum Proxy-Knoten aufzubauen, der sich anstelle des Netzwerkservers befindet, wobei der Proxy-Knoten dafür konfiguriert ist, anstelle des Tunnel-Gateways eine TCP-Verbindung zum Netzwerkserver entsprechend der lP-Adresse des Tunnel-Gateways aufzubauen, und wobei sich das Tunnel-Gateway zwischen dem UE und dem Proxy-Knoten befindet;
Senden einer Verschlüsselungseinrichtungs-Anforderung an das Tunnel-Gateway unter Verwendung der TCP-Verbindung, wobei die Verschlüsselungseinrichtungs-Anforderung verwendet wird, um das Tunnel-Gateway anzuweisen, die Verschlüsselungseinrichtungs-Anforderung an den Netzwerkserver weiterzuleiten, und wobei die Verschlüsselungseinrichtungs-Anforderung eine lP-Adresse des UE und die IP-Adresse des Netzwerkservers umfasst; und
Aufbauen, gemäß der lP-Adresse des Netzwerkservers, die durch den Proxy-Knoten erhalten wird, nachdem der Proxy-Knoten die Verschlüsselungseinrichtungs-Anforderung abfängt, der ersten verschlüsselten Verbindung zum Proxy-Knoten, der sich anstelle des Netzwerkservers befindet, wobei der Proxy-Knoten dafür konfiguriert ist, die Verschlüsselungseinrichtungs-Anforderung an den Netzwerkserver unter Verwendung der TCP-Verbindung weiterzuleiten, und wobei die Verschlüsselungseinrichtungs-Anforderung verwendet wird, um den Netzwerkserver anzuweisen, die zweite verschlüsselte Verbindung zum Proxy-Knoten, der sich anstelle des UE befindet, aufzubauen.

11. Computerlesbares Speichermedium zum Speichern eines von einem Prozessor auszuführenden Programms, **dadurch gekennzeichnet, daß** das Programm Befehle zur Durchführung des Verfahrens nach einem der Ansprüche 1 bis 5 enthält.

## Revendications

1. Procédé de traitement de service, dans lequel le procédé comprend :
l'établissement (101, 201), par l'équipement utilisateur, UE, dans un processus d'établissement de connexion entre l'UE et un serveur réseau, d'une première connexion chiffrée à un nœud proxy qui est à la place du serveur réseau, le nœud proxy étant configuré pour établir une seconde connexion chiffrée au serveur réseau ;
la fourniture (102, 202), par l'UE, au nœud proxy d'un contexte de chiffrement qui est généré dans le processus d'établissement de la première connexion chiffrée, le contexte de chiffrement étant utilisé pour demander au nœud proxy de générer une première clé selon le contexte de chiffrement ; et
la génération, par l'UE, d'une seconde clé selon le contexte de chiffrement, la seconde clé correspondant à la première clé de sorte que les informations chiffrées à l'aide de la seconde clé peuvent être déchiffrées à l'aide de la première clé ;
la première clé et la seconde clé étant utilisées pour réaliser la première connexion chiffrée ; et
le chiffrement (103, 203), par l'UE, des informations de service à l'aide de la seconde clé, et l'envoi d'un texte chiffré obtenu au nœud proxy, le texte chiffré étant utilisé pour demander au nœud proxy de déchiffrer le texte chiffré à l'aide de la première clé, afin de traiter les informations de service obtenues et d'envoyer les informations de service traitées au serveur réseau à l'aide de la seconde connexion chiffrée ;
la fourniture, par l'UE, au nœud proxy d'un contexte de chiffrement qui est généré dans le processus d'établissement de la première connexion chiffrée comprenant :
la réception, par l'UE, d'une demande d'obtention qui transporte un identifiant de connexion de la connexion TCP et est transmise par un serveur clé, et l'envoi du contexte de chiffrement au serveur clé selon l'identifiant de connexion, le contexte de chiffrement étant utilisé pour demander au serveur clé de transmettre le contexte de chiffrement au nœud proxy, et la demande d'obtention étant envoyée par le nœud proxy au serveur clé et étant envoyée par le serveur clé après que le serveur clé a déterminé l'UE selon l'identifiant de connexion ; ou
la réception, par l'UE, d'une demande d'obtention qui transporte un identifiant de connexion de la connexion TCP et est envoyée par le nœud proxy, et l'envoi du contexte de chiffrement à un serveur clé selon l'identifiant de connexion, le contexte de chiffrement étant utilisé pour demander au serveur clé de transmettre le contexte de chiffrement au nœud proxy ; ou
l'envoi, par l'UE, du contexte de chiffrement et d'un identifiant de connexion de la connexion TCP à un serveur clé, le contexte de chiffrement étant transmis au nœud proxy après que le serveur clé a déterminé, selon une correspondance, le nœud proxy correspondant à l'identifiant de connexion, et la correspondance étant utilisée pour indiquer une relation entre l'identifiant de connexion et le nœud proxy, la connexion entre l'UE et le serveur clé et la connexion entre le serveur clé et le nœud proxy étant respectivement chiffrées.

2. Procédé selon la revendication 1, dans lequel l'établissement, par l'UE, dans un processus d'établissement de connexion entre l'UE et un serveur réseau, d'une première connexion chiffrée à un nœud proxy qui est à la place du serveur réseau, le nœud proxy étant configuré pour établir une seconde connexion chiffrée au serveur réseau comprend :
l'envoi, par l'UE, d'une demande d'établissement TCP, Protocole de contrôle de transmission, au serveur réseau, la demande d'établissement TCP comprenant une adresse de protocole Internet IP de l'UE et une adresse IP du serveur réseau ;
l'établissement, par l'UE selon l'adresse IP du serveur réseau obtenue par le nœud proxy après que le nœud proxy a intercepté la demande d'établissement TCP, d'une connexion TCP au nœud proxy qui est à la place du serveur réseau, le nœud proxy étant configuré pour établir, à la place de l'UE, une connexion TCP au serveur réseau selon l'adresse IP de l'UE ; et
l'envoi, par l'UE, d'une demande d'établissement de chiffrement au serveur réseau à l'aide de la connexion TCP, et l'établissement de la première connexion chiffrée au nœud proxy qui est à la place du serveur réseau, le nœud proxy étant configuré pour établir, à la place de l'UE, la seconde connexion chiffrée au serveur réseau selon la demande d'établissement de chiffrement.

3. Procédé selon la revendication 1, dans lequel l'établissement, par l'UE, dans un processus d'établissement de connexion entre l'UE et un serveur réseau, d'une première connexion chiffrée à un nœud proxy qui est à la place du serveur réseau, le nœud proxy étant configuré pour établir une seconde connexion chiffrée au serveur réseau comprend :
l'envoi, par l'UE, d'une demande d'établissement TCP au serveur réseau, la demande d'établissement TCP comprenant une adresse IP de l'UE et une adresse IP du serveur réseau ;
l'établissement, par l'UE selon l'adresse IP du serveur réseau obtenue par le nœud proxy après que le nœud proxy a intercepté la demande d'établissement TCP, d'une connexion TCP au nœud proxy qui est à la place du serveur réseau, le nœud proxy étant configuré pour établir une connexion TCP au serveur réseau selon une adresse IP du nœud proxy ; et
l'envoi, par l'UE, d'une demande d'établissement de chiffrement au serveur réseau à l'aide de la connexion TCP, et l'établissement, selon la demande d'établissement de chiffrement interceptée par le nœud proxy, de la première connexion chiffrée au nœud proxy qui est à la place du serveur réseau, le nœud proxy étant configuré pour établir la seconde connexion chiffrée au serveur réseau selon l'adresse IP du nœud proxy.

4. Procédé selon la revendication 1, dans lequel l'établissement, par l'UE, dans un processus d'établissement de connexion entre l'UE et un serveur réseau, d'une première connexion chiffrée à un nœud proxy qui est à la place du serveur réseau, le nœud proxy étant configuré pour établir une seconde connexion chiffrée au serveur réseau comprend :
l'envoi, par l'UE, d'une demande d'établissement TCP à une passerelle de tunnel, la demande d'établissement TCP comprenant une adresse IP de l'UE et une adresse IP de la passerelle de tunnel, et la passerelle de tunnel étant située entre le nœud proxy et le serveur réseau ;
l'établissement, par l'UE selon l'adresse IP de la passerelle de tunnel obtenue par le nœud proxy après que le nœud proxy a intercepté la demande d'établissement TCP, d'une connexion TCP au nœud proxy qui est à la place de la passerelle de tunnel, le nœud proxy étant configuré pour établir, à la place de l'UE, une connexion TCP à la passerelle de tunnel selon l'adresse IP de l'UE, et déclencher la passerelle de tunnel afin d'établir une connexion TCP avec le serveur réseau selon l'adresse IP de la passerelle de tunnel ;
l'envoi, par l'UE, d'une demande d'établissement de chiffrement à la passerelle de tunnel à l'aide de la connexion TCP, la demande d'établissement de chiffrement comprenant l'adresse IP de l'UE et une adresse IP du serveur réseau ; et
l'établissement, par l'UE selon l'adresse IP du serveur réseau, de la première connexion chiffrée au nœud proxy qui est à la place du serveur réseau, le nœud proxy étant configuré pour transmettre la demande d'établissement de chiffrement à la passerelle de tunnel à l'aide de la connexion TCP, et la demande d'établissement de chiffrement étant utilisée pour demander à la passerelle de tunnel de transmettre la demande d'établissement de chiffrement au serveur réseau à l'aide de la connexion TCP et pour demander au serveur réseau d'établir la seconde connexion chiffrée au nœud proxy qui est à la place de l'UE.

5. Procédé selon la revendication 1, dans lequel l'établissement, par l'UE, dans un processus d'établissement de connexion entre l'UE et un serveur réseau, d'une première connexion chiffrée à un nœud proxy qui est à la place du serveur réseau, le nœud proxy étant configuré pour établir une seconde connexion chiffrée au serveur réseau comprend :
l'établissement, par l'UE, d'une connexion TCP à une passerelle de tunnel, la passerelle de tunnel étant configurée pour envoyer une demande d'établissement TCP au serveur réseau, la demande d'établissement TCP comprenant une adresse IP de la passerelle de tunnel et une adresse IP du serveur réseau, la passerelle de tunnel étant configurée pour établir, selon l'adresse IP du serveur réseau obtenue par le nœud proxy après que le nœud proxy a intercepté la demande d'établissement TCP, une connexion TCP au nœud proxy à la place du serveur réseau, le nœud proxy étant configuré pour établir, à la place de la passerelle de tunnel, une connexion TCP au serveur réseau selon l'adresse IP de la passerelle de tunnel, et la passerelle de tunnel étant située entre l'UE et le nœud proxy ;
l'envoi, par l'UE, d'une demande d'établissement de chiffrement à la passerelle de tunnel à l'aide de la connexion TCP, la demande d'établissement de chiffrement étant utilisée pour demander à la passerelle de tunnel de transmettre la demande d'établissement de chiffrement au serveur réseau, et la demande d'établissement de chiffrement comprenant une adresse IP de l'UE et l'adresse IP du serveur réseau ; et
l'établissement, par l'UE selon l'adresse IP du serveur réseau obtenue par le nœud proxy après que le nœud proxy a intercepté la demande d'établissement de chiffrement, de la première connexion chiffrée au nœud proxy qui est à la place du serveur réseau, le nœud proxy étant configuré pour transmettre la demande d'établissement de chiffrement au serveur réseau à l'aide de la connexion TCP, et la demande d'établissement de chiffrement étant utilisée pour demander au serveur réseau d'établir la seconde connexion chiffrée au nœud proxy qui est à la place de l'UE.

6. Système comprenant un serveur réseau, un nœud proxy, un serveur clé et un appareil de traitement de service, appliqué à l'équipement utilisateur, UE, dans lequel l'appareil de traitement de service comprend :
un module d'établissement de connexion (810), configuré pour établir, dans un processus d'établissement de connexion entre l'UE et le serveur réseau, une première connexion chiffrée au nœud proxy qui est à la place du serveur réseau, le nœud proxy étant configuré pour établir une seconde connexion chiffrée au serveur réseau ;
un module de fourniture de clé (820), configuré pour fournir au nœud proxy un contexte de chiffrement qui est généré au cours de l'établissement de la première connexion chiffrée, le contexte de chiffrement étant utilisé pour demander au nœud proxy de générer une première clé selon le contexte de chiffrement ; et
la génération d'une seconde clé selon le contexte de chiffrement, la seconde clé correspondant à la première clé de sorte que les informations chiffrées à l'aide de la seconde clé peuvent être déchiffrées à l'aide de la première clé ;
la première clé et la seconde clé étant utilisées pour réaliser la première connexion chiffrée ; et
un module d'envoi de texte chiffré (830), configuré pour chiffrer les informations de service à l'aide de la seconde clé générée par le module de fourniture de clé, et pour envoyer un texte chiffré obtenu au nœud proxy, le texte chiffré étant utilisé pour demander au nœud proxy de déchiffrer le texte chiffré à l'aide de la première clé, afin de traiter les informations de service obtenues et d'envoyer les informations de service traitées au serveur réseau à l'aide de la seconde connexion chiffrée ;
le module de fourniture de clé étant spécifiquement configuré pour :
recevoir une demande d'obtention qui transporte un identifiant de connexion de la connexion TCP et est transmise par le serveur clé, et envoyer le contexte de chiffrement au serveur clé selon l'identifiant de connexion, le contexte de chiffrement étant utilisé pour demander au serveur clé de transmettre le contexte de chiffrement au nœud proxy, et la demande d'obtention étant envoyée par le nœud proxy au serveur clé et étant envoyée par le serveur clé après que le serveur clé a déterminé l'UE selon l'identifiant de connexion ; ou
recevoir une demande d'obtention qui transporte un identifiant de connexion de la connexion TCP et est envoyée par le nœud proxy, et envoyer le contexte de chiffrement à un serveur clé selon l'identifiant de connexion, le contexte de chiffrement étant utilisé pour demander au serveur clé de transmettre le contexte de chiffrement au nœud proxy ; ou
envoyer le contexte de chiffrement et un identifiant de connexion de la connexion TCP au serveur clé, le contexte de chiffrement étant transmis au nœud proxy après que le serveur clé a déterminé, selon une correspondance, le nœud proxy correspondant à l'identifiant de connexion, et la correspondance étant utilisée pour indiquer une relation entre l'identifiant de connexion et le nœud proxy, la connexion entre l'UE et le serveur clé et la connexion entre le serveur clé et le nœud proxy étant respectivement chiffrées.

7. Système selon la revendication 6, dans lequel le module d'établissement de connexion est spécifiquement configuré pour :
envoyer une demande d'établissement TCP, Protocole de contrôle de transmission, au serveur réseau, la demande d'établissement TCP comprenant une adresse de protocole Internet IP de l'UE et une adresse IP du serveur réseau ;
établir, selon l'adresse IP du serveur réseau obtenue par le nœud proxy après que le nœud proxy a intercepté la demande d'établissement TCP, une connexion TCP au nœud proxy qui est à la place du serveur réseau, le nœud proxy étant configuré pour établir, à la place de l'UE, une connexion TCP au serveur réseau selon l'adresse IP de l'UE ; et
envoyer une demande d'établissement de chiffrement au serveur réseau à l'aide de la connexion TCP et établir, selon la demande d'établissement de chiffrement interceptée par le nœud proxy, la première connexion chiffrée au nœud proxy qui est à la place du serveur réseau, le nœud proxy étant configuré pour établir, à la place de l'UE, la seconde connexion chiffrée au serveur réseau selon la demande d'établissement de chiffrement.

8. Système selon la revendication 6, dans lequel le module d'établissement de connexion est spécifiquement configuré pour :
envoyer une demande d'établissement TCP au serveur réseau, la demande d'établissement TCP comprenant une adresse IP de l'UE et une adresse IP du serveur réseau ;
établir, selon l'adresse IP du serveur réseau obtenue par le nœud proxy après que le nœud proxy a intercepté la demande d'établissement TCP, une connexion TCP au nœud proxy qui est à la place du serveur réseau, le nœud proxy étant configuré pour établir une connexion TCP au serveur réseau selon une adresse IP du nœud proxy ; et
envoyer une demande d'établissement de chiffrement au serveur réseau à l'aide de la connexion TCP et établir, selon la demande d'établissement de chiffrement interceptée par le nœud proxy, la première connexion chiffrée au nœud proxy qui est à la place du serveur réseau, le nœud proxy étant configuré pour établir la seconde connexion chiffrée au serveur réseau selon l'adresse IP du nœud proxy.

9. Système selon la revendication 6, dans lequel le module d'établissement de connexion est spécifiquement configuré pour :
envoyer une demande d'établissement TCP à une passerelle de tunnel, la demande d'établissement TCP comprenant une adresse IP de l'UE et une adresse IP de la passerelle de tunnel, et la passerelle de tunnel étant située entre le nœud proxy et le serveur réseau ;
établir, selon l'adresse IP de la passerelle de tunnel obtenue par le nœud proxy après que le nœud proxy a intercepté la demande d'établissement TCP, une connexion TCP au nœud proxy qui est à la place de la passerelle de tunnel, le nœud proxy étant configuré pour établir, à la place de l'UE, une connexion TCP à la passerelle de tunnel selon l'adresse IP de l'UE, et déclencher la passerelle de tunnel pour établir une connexion TCP au serveur réseau selon l'adresse IP de la passerelle de tunnel ;
envoyer une demande d'établissement de chiffrement à la passerelle de tunnel à l'aide de la connexion TCP, la demande d'établissement de chiffrement comprenant l'adresse IP de l'UE et une adresse IP du serveur réseau ; et
établir, selon l'adresse IP du serveur réseau obtenue par le nœud proxy après que le nœud proxy a intercepté la demande d'établissement de chiffrement, la première connexion chiffrée au nœud proxy qui est à la place du serveur réseau, le nœud proxy étant configuré pour transmettre la demande d'établissement de chiffrement à la passerelle de tunnel à l'aide de la connexion TCP, et la demande d'établissement de chiffrement étant utilisée pour demander à la passerelle de tunnel de transmettre la demande d'établissement de chiffrement au serveur réseau à l'aide de la connexion TCP et pour demander au serveur réseau d'établir la seconde connexion chiffrée au nœud proxy qui est à la place de l'UE.

10. Système selon la revendication 6, dans lequel le module d'établissement de connexion est spécifiquement configuré pour :
établir une connexion TCP à une passerelle de tunnel, la passerelle de tunnel étant configurée pour envoyer une demande d'établissement TCP au serveur réseau, la demande d'établissement TCP comprenant une adresse IP de la passerelle de tunnel et une adresse IP du serveur réseau, la passerelle de tunnel étant configurée pour établir, selon l'adresse IP du serveur réseau obtenue par le nœud proxy après que le nœud proxy a intercepté la demande d'établissement TCP, une connexion TCP au nœud proxy qui est à la place du serveur réseau, le nœud proxy étant configuré pour établir, à la place de la passerelle de tunnel, une connexion TCP au serveur réseau selon l'adresse IP de la passerelle de tunnel, et la passerelle de tunnel étant située entre l'UE et le nœud proxy ;
envoyer une demande d'établissement de chiffrement à la passerelle de tunnel à l'aide de la connexion TCP, la demande d'établissement de chiffrement étant utilisée pour demander à la passerelle de tunnel de transmettre la demande d'établissement de chiffrement au serveur réseau, et la demande d'établissement de chiffrement comprenant une adresse IP de l'UE et l'adresse IP du serveur réseau ; et
établir, selon l'adresse IP du serveur réseau obtenue par le nœud proxy après que le nœud proxy a intercepté la demande d'établissement de chiffrement, la première connexion chiffrée au nœud proxy qui est à la place du serveur réseau, le nœud proxy étant configuré pour transmettre la demande d'établissement de chiffrement au serveur réseau à l'aide de la connexion TCP, et la demande d'établissement de chiffrement étant utilisée pour demander au serveur réseau d'établir la seconde connexion chiffrée au nœud proxy qui est à la place de l'UE.

11. Support de stockage lisible par ordinateur, stockant un programme à exécuter par un processeur, **caractérisé en ce que** le programme comprend des instructions pour effectuer les étapes selon l'une quelconque des revendications 1 à 5.
